# EUROPÄISCHE PATENTSCHRIFT

(11) **EP 4 069 559 B1**
(45) Veröffentlichungstag und Bekanntmachung des Hinweises auf die Patenterteilung: **08.01.2025**
(21) Anmeldenummer: 20817276.7
(22) Anmeldetag: 01.12.2020
(51) Int. Cl.: B60T 13/26, B60T 13/38

(54) **MONOSTABIL UND FEHLERTOLERANT AUSGELEGTE FESTSTELLBREMSVENTILANORDNUNG**
MONOSTABLE AND FAULT-TOLERANT PARKING BRAKE VALVE ASSEMBLY
ENSEMBLE SOUPAPE DE FREIN DE STATIONNEMENT MONOSTABLE ET INSENSIBLE AUX DÉFAILLANCES

(30) Priorität: 04.12.2019 DE 102019133011
(43) Veröffentlichungstag der Anmeldung: 12.10.2022
(73) Patentinhaber: ZF CV Systems Global GmbH, 3006 Bern (CH)
(72) Erfinder: DIECKMANN, Thomas, 30982 Pattensen (DE); LÜLFING, Ralph-Carsten, 30826 Garbsen (DE); VAN THIEL, Julian, 30938 Grossburgwedel (DE); WULF, Oliver, 31535 Neustadt (DE)
(74) Vertreter: Ohlendorf, Henrike
(86) Internationale Anmeldenummer: PCT/EP2020/084045
(87) Internationale Veröffentlichungsnummer: WO 2021/110641

(56) Entgegenhaltungen:
- DE-A1- 102005 024 120

## Beschreibung

Die Erfindung betrifft eine Feststellbremsventilanordnung für ein elektronisch steuerbares pneumatisches Bremssystem eines Fahrzeugs, insbesondere Nutzfahrzeug. Die Erfindung betrifft ferner ein elektronisch steuerbares pneumatisches Bremssystem sowie ein Fahrzeug.

In Fahrzeugen, insbesondere Nutzfahrzeugen, mit einem pneumatischen Bremssystem, insbesondere ausgebildet als elektronisches Bremssystem (EBS) oder Antiblockiersystem (ABS), können zum Aussteuern von Bremsdrücken von einer Steuereinheit (ECU) elektropneumatische Ventile, beispielsweise Relaisventilen vorgeschaltete elektropneumatische Schaltventile, angesteuert werden, die dann in Abhängigkeit einer angeforderten Fahrzeug-Soll-Verzögerung pneumatisch einen Bremsdruck an die Bremszylinder von Betriebsbremsen des Bremssystems weiterleiten. Module, in die solche Einheiten integriert sind, werden häufig als Achsmodulatoren bezeichnet.

Bei Bremssystemen für einen Fahrzeugzug mit einem Zugfahrzeug und einem Anhänger weist das Bremssystem eine Anhängersteuereinheit, auch Trailer Control Valve (TCV) genannt, auf, die dazu vorgesehen ist, die von dem Zugwagen vorgegebenen Fahrzeug-Soll-Verzögerungen entsprechend auch über Anschlüsse, nämlich einen Anhängerbremsdruckanschluss und einen Anhängerversorgungsdruckanschluss, die auch als "gelber" und "roter" Kupplungskopf bezeichnet werden, pneumatisch auszusteuern. Über den Anhängerversorgungsdruckanschluss wird der Anhängerwagen mit einem Versorgungsdruck aus einem dafür vorgesehenen Vorrat des Zugwagens versorgt, während über den Anhängerbremsdruckanschluss der entsprechende Bremsdruck ausgesteuert wird.

Als ein weiteres Bauteil oder Modul weisen Bremssysteme der vorstehenden Gattung eine Feststellbremseinheit, auch als elektropneumatische Handbremse (EPH) bezeichnet, auf. Solche Feststellbremseinheiten werden üblicherweise mit sogenannten Federspeichern betrieben, also Bremseinrichtungen, die aufgrund einer Federkraft eine oder mehrere Achsen des Zufahrzeugs bremsen. Im belüfteten Zustand sind die Bremsen gelöst und im entlüfteten Zustand gebremst. In einem drucklosen Zustand wird das entsprechende Fahrzeug also gebremst. Zur Aktivierung der Feststellbremseinheit ist in der Regel in der Fahrerkabine des Zugwagens ein elektrischer Schalter vorgesehen, über den ein entsprechendes Signal an eine elektronische Steuereinheit ausgebbar ist, die dann ein oder mehrere elektropneumatische Ventile so schaltet, dass die Federspeicher entweder ent- oder belüftet werden.

Die Feststellbremseinheit, also die elektropneumatische Handbremse, wird zum Parken des Fahrzeugzugs aber auch als Zusatzbremse in besonderen Situationen verwendet. Das heißt, neben dem normalen Betriebsbremsen werden die Federspeicher wenigstens teilweise entlüftet, um diese zusätzlich oder alternativ zur Bremsung zu verwenden. So wird z.B. bei einem reinen Hilfsbremsen ausschließlich über Federspeicher im Zugfahrzeug und Betriebsbremsen im Anhängerwagen gebremst. Die Betriebsbremsen im Zugfahrzeug sind beim reinen Hilfsbremsen unbestätigt. Alternativ kann auch ein Redundanzmodus umgesetzt werden, wo z.B. bei einem Kreisausfall an der Hinterachse alternativ zu den Betriebsbremsen die Federspeicher zur Hilfe genommen werden. Die Vorderachse kann weiterhin über Betriebsbremsen gebremst werden, und der Anhängerwagen ebenfalls über Betriebsbremsen.

Die Feststellbremsventilanordnungen der eingangs genannten Art, betreffend die Erfindung, werden in solchen Feststellbremseinheiten oder als solche Feststellbremseinheiten eingesetzt, wenn die Feststellbremsventilanordnung in ein Modul integriert ist. Typischerweise arbeiten solche Feststellbremsventilanordnungen mit einem Relaisventil, zum Volumenverstärken von einem Vorsteuerdruck, der von der Vorsteuereinheit bereitgestellt wird. Eine typische Feststellbremsventilanordnung, in Form eines Feststellbremsmoduls, ist in DE 10 2012 000 435 A1 der hiesigen Anmelderin offenbart. Das darin offenbarte Modul weist ein Relaisventil auf, das mittels einer Vorsteuereinheit bestehend aus einem 3/2-Wege-Ventil und einem 2/2-Wege-Ventil, mit einem Vorsteuerdruck versorgt wird. Das Relaisventil volumenverstärkt den Vorsteuerdruck und stellt diesen an einem Federspeicheranschluss bereit, an dem ein oder mehrere Federspeicherbremszylinder angeschlossen sein können. Ein ähnliches Modul ist in EP 2 254 779 B1, ebenfalls der hiesigen Anmelderin, offenbart. Ein weiteres Beispiel ähnlicher Art ist in DE 10 2007 047 691 A1 offenbart.

Daneben sind weitere Systeme bekannt, beispielsweise solche, die ein Bistabilventil in der Vorsteuereinheit umfassen. Ein Beispiel hierzu ist in DE 10 2017 002 715 A1 oder DE 10 2017 002 714 A1 der hiesigen Anmelderin offenbart.

Es existieren noch integrierte Ansätze, die die Feststellbremseinheit mit einem Anhängersteuerventil integrieren. Ein solches System ist beispielsweise aus DE 10 2017 002 953 bekannt.

Darüber hinaus ist es in modernen elektronisch steuerbaren pneumatischen Bremssystemen, die insbesondere bei Nutzfahrzeugen eingesetzt werden, die für einen autonomen Fahrbetrieb vorgesehen sind, wichtig, Maßnahmen bereitzustellen, die bei einem Fehler in dem Bremssystem dennoch ein sicheres Verzögern des Nutzfahrzeugs zulassen. Hier gibt es Ansätze, vollständig redundante Bremssysteme einzusetzen, teilweise redundante Bremssysteme oder nur verschiedene Ebenen in einem Bremssystem, sodass bei einem Fehler in einer ersten Ebene das Bremssystem in einer zweiten Ebene wenigstens eingeschränkt weiterbetrieben werden kann.

Tritt jedoch beispielsweise ein Doppelfehler auf, der sowohl das primäre Bremssystem als auch das redundante Bremssystem betrifft, besteht Gefahr, dass das Nutzfahrzeug nicht mehr kontrolliert gebremst werden kann. Für solche Fälle besteht Bedarf, ein System bereitzustellen, das ein sicheres Verzögern des Fahrzeugs zulässt.

Ein System, das insbesondere auf eine hohe Restverfügbarkeit abzielt, ist beispielsweise aus DE 10 2014 013 756 B3 bekannt. Dort ist eine elektrische Ausrüstung eines Fahrzeugs mit einer wenigstens teilweise elektrischen Brems- und Lenkeinrichtung offenbart, die umfasst: eine elektrische oder elektromechanische Lenkeinrichtung, die mit einem Lenkgetriebe verbunden ist und eine elektronische Lenksteuereinrichtung sowie einen elektrischen Lenksteller und eine Betriebsbremseinrichtung umfasst. Als Betriebsbremseinrichtung wird in DE 10 2014 013 756 B3 eine elektropneumatische Betriebsbremseinrichtung vorgeschlagen, welche eine elektropneumatische Betriebsbremsventileinrichtung, eine elektronische Bremssteuereinrichtung, elektropneumatische Modulatoren sowie pneumatische Radbremsaktuatoren umfasst, wobei die elektronische Bremssteuereinrichtung die elektropneumatischen Modulatoren elektrisch steuert, um pneumatische Bremsdrücke oder Bremssteuerdrücke für die pneumatischen Radbremsaktuatoren radindividuell, achsindividuell oder seitenindividuell zu erzeugen. Die elektropneumatische Betriebsbremsventileinrichtung weist ein Betriebsbremsbetätigungsorgan, sowie ferner innerhalb eines elektrischen Betriebsbremskreises einen elektrischen Kanal mit einem vom Betriebsbremsbetätigungsorgan betätigbaren elektrischen Bremswertgeber auf. Weiterhin ist eine die Betätigungssignale empfangende elektronische Auswerteeinrichtung vorgesehen, welche abhängig von den Betätigungssignalen Bremsanforderungssignale in die elektronische Bremssteuereinrichtung einsteuert, sowie innerhalb wenigstens eines pneumatischen Betriebsbremskreises wenigsten einen pneumatischen Kanal umfasst, bei welchem durch Betätigung des Betriebsbremsbetätigungsorgans aufgrund einer Fahrerbremsanforderung wenigstens ein Steuerkolben der Betriebsbremsventileinrichtung mit einer ersten Betätigungskraft belastet wird und der Steuerkolben in Antwort hierauf es erlaubt, pneumatische Bremsdrücke bzw. Bremssteuerdrücke für die pneumatischen Radbremsaktuatoren zu erzeugen. Die elektronische Auswerteeinrichtung der elektropneumatischen Betriebsbremsventileinrichtung umfasst weiterhin elektronische Steuermittel zum Erzeugen einer zweiten Betätigungskraft, unabhängig von einer Fahrerbremsanforderung, welche bei Vorliegen einer vom Fahrerwunsch unabhängigen Bremsanforderung in Bezug zur ersten Betätigungskraft gleichsinnig oder gegensinnig auf den Steuerkolben wirkt. Die elektropneumatische Betriebsbremseinrichtung wird von einer elektrischen Energiequelle versorgt, welche unabhängig von einer zweiten elektrischen Energiequelle ist, welche die elektropneumatische Betriebsbremsventileinrichtung mit elektrischer Energie versorgt. Hierdurch wird sichergestellt, dass wenigstens eines der beiden Systeme möglichst immer funktioniert. Die elektrische oder elektropneumatische Lenkeinrichtung wird dabei von der zweiten elektrischen Energiequelle mit Energie versorgt. Hierdurch soll eine hohe Restverfügbarkeit erreicht werden. Das System ist allerdings komplex und lässt sich so nicht ohne Weiteres in jedem Nutzfahrzeug umsetzen.

Ein System, das eine elektronisch pneumatisch gesteuerte Redundanz bereitstellt, ist in DE 10 2016 005 318 A1 offenbart. Das dort offenbarte System nutzt ein Bypass-Ventil, um je nach Ausfall eines Subsystems Steuerdrücke weiterzuleiten, um so den jeweils elektrisch ausgefallenen Kreis wenigstens pneumatisch zu versorgen. Auch hierdurch wird die Restverfügbarkeit erhöht. Ähnliche Systems sind in DE 10 2016 010 462 A1 und in DE 10 2016 010 464 A1 offenbart.

Ferner offenbart DE 10 2016 010 463 A1 ein System und Verfahren, bei welchem Vorsteuerventile über ein Redundanzsignal elektronisch angesteuert werden, falls ein Ausfall oder ein Defekt bei der elektronischen Ansteuerung von Radbremsen des Bremssystems festgestellt wird. Das System versucht dabei, das Blockieren von Rädern zu verhindern.

Aus DE 10 2017 002 716, DE 10 2017 002 718, DE 10 2017 002 719 sowie DE 10 2017 002 721 sind Systeme bekannt, bei denen jeweils pneumatisch eine Redundanz erzeugt wird. Hierbei werden verschiedene ausgesteuerte Bremsdrücke, beispielsweise Vorderachs-, Hinterachs- oder Anhängerbremsdrücke genutzt, um diese ausgefallenen Systemen, wie beispielsweise dem Vorderachsbremskreis, Hinterachsbremskreis, Parkbremskreis oder Anhängerbremskreis, als Redundanzdruck bereitzustellen. Auf diese Weise wird eine untergelagerte pneumatische Redundanzebene erzeugt, sodass ebenfalls eine hohe Restverfügbarkeit erreicht wird.

Darüber hinaus existieren auch Systeme, die den Anhänger mit einbeziehen, wie beispielsweise in DE 10 2016 010 461 A1 offenbart.

DE 10 2005 024120 A1 zeigt eine Parkbremseinrichtung eines Nutzfahrzeugs, beinhaltend wenigstens einen Federspeicherbremszylinder sowie einen ersten Parkbremskreis mit einem Vorratsdruckbehälter und einer ersten Steuerventileinrichtung, welche den wenigstens einen Federspeicherbremszylinder (6) be- oder entlüftet. Es ist vorgesehen, dass für den Fall, dass der erste Parkbremskreis ausfällt, ein weiterer elektropneumatischer Parkbremskreis mit einem weiteren, separaten Vorratsdruckbehälter und einer wenigstens ein Magnetventil beinhaltenden weiteren Steuerventileinrichtung wenigstens zum Belüften des Federspeicherbremszylinders im Notlösefall vorgesehen ist, wobei zumindest die weitere Steuerventileinrichtung in unmittelbarer Nähe des wenigstens einen Federspeicherbremszylinders angeordnet ist.

Vor diesem Hintergrund stellt sich die Erfindung die Aufgabe, eine Feststellbremsventilanordnung der eingangs genannten Art bereitzustellen, welche in Bezug auf die Sicherheit erhöht ist und insbesondere eine Feststellbremsventilanordnung bereitzustellen, die nicht den gelösten Zustand im Falle von schwerwiegenden Doppelfehlern aufrechterhält, sondern vielmehr eine Lösung bereitzustellen, die ein kontrolliertes Bremsen des Fahrzeugs erlaubt. Auf diese Weise soll das Fahrzeug, auch in den Fehlerfällen, in denen es elektrisch nicht mehr gebremst werden kann, beispielsweise aufgrund eines Stromausfalls, kontrolliert in einen sicheren Zustand überführt werden und gegen Wegrollen gesichert werden.

Die Erfindung löst die Aufgabe bei einer Feststellbremsventilanordnung der eingangs genannten Art dadurch, dass ein erster, einen ersten oder zweiten Vorratsdruck empfangender Druckluftpfad vorgesehen ist, der eine erste monostabile Ventileinheit zum Bereitstellen eines ersten Feststellbremsdrucks aufweist, ein zweiter, den ersten oder den zweiten Vorratsdruck empfangender Druckluftpfad mit einer zweiten monostabilen Ventileinheit zum Bereitstellen eines zweiten Feststellbremsdrucks vorgesehen ist, und wobei ferner ein erstes Wechselventil vorgesehen ist, mit einem mit dem ersten Druckluftpfad und den ersten Feststellbremsdruck empfangenden ersten Wechselventilanschluss, einem mit dem zweiten Druckluftpfad verbundenen und den zweiten Feststellbremsdruck empfangenden zweiten Wechselventilanschluss, und einem mit einem Federspeicherbremszylinder verbindbaren oder verbundenen dritten Wechselventilanschluss, wobei das erste Wechselventil jeweils den höheren des ersten Feststellbremsdrucks und des zweiten Feststellbremsdrucks an dem dritten Wechselventilanschluss aussteuert.

Erfindungsgemäß wird also am dritten Wechselventilanschluss, der mittelbar oder unmittelbar mit einem oder mehreren Federspeicherbremszylindern verbindbar oder verbunden ist, der jeweils höhere des ersten Feststellbremsdrucks und des zweiten Feststellbremsdrucks ausgesteuert. Nur dieser, nämlich der höhere der beiden Feststellbremsdrücke, wird dann zum Belüften der entsprechend angeschlossenen Federspeicherbremszylinder verwendet. An den dritten Wechselventilanschluss können der oder die Federspeicherbremszylinder unmittelbar angeschlossen werden, das heißt am dritten Wechselventilanschluss wird unmittelbar ein Volumendruck ausgesteuert, der zum Belüften des wenigstens einen Federspeicherbremszylinders verwendet wird. Andererseits ist es auch denkbar und bevorzugt, dass an den dritten Wechselventilanschluss zunächst ein Relaisventil angeschlossen wird, welches dann dem vom dritten Wechselventilanschluss empfangenen Druck volumenverstärkt und den volumenverstärkten Druck an einem oder mehreren Federspeicherbremszylindern bereitstellt. Die Kernidee besteht darin, dass das Wechselventil von zwei separaten, monostabil ausgelegten, Druckluftpfaden angesteuert wird. Jeder der ersten und zweiten Druckluftpfade ist monostabil, das heißt, fällt stromlos in einen Schaltzustand zurück und ist nicht, wie im Stand der Technik häufig, bistabil ausgelegt, hält also auch stromlos den geschalteten Zustand aufrecht. Solange aber einer der ersten und zweiten Druckluftpfade einen Feststellbremsdruck liefert, nämlich entweder den ersten Feststellbremsdruck oder den zweiten Feststellbremsdruck, bleiben die Federspeicherbremszylinder belüftet und damit gelöst. Erst wenn beide Druckluftpfade keinen Feststellbremsdruck liefern, werden auch die Federspeicherbremszylinder entlüftet und damit zugespannt.

Diese Anordnung bietet also die Möglichkeit, den ersten Druckluftpfad beispielsweise mit dem ersten Bremskreis zu koppeln, und den zweiten Druckluftpfad beispielsweise mit einem zweiten Bremskreis zu koppeln, sodass erst bei Ausfall von beiden Bremskreisen die Federspeicherbremszylinder eingelegt werden. Hierdurch ist die Sicherheit des Fahrzeugs, in das die Feststellbremsventilanordnung eingebaut wird, verbessert. In einem schweren Doppelfehler, in dem sowohl der erste als auch der zweite Bremskreis ausfallen, das heißt auch der erste und zweite Druckluftpfad keinen Feststellbremsdruck mehr liefern, wird das Fahrzeug, in das die Feststellbremsventilanordnung eingebaut ist, automatisch gebremst. Es ist auch möglich und bevorzugt, den ersten Druckluftpfad mit einer Betriebsebene des Bremssystems und den zweiten Druckluftpfad mit einer Redundanzebene zu koppeln. Erst, sobald sowohl die Betriebsebene als auch die Redundanzebene ausfallen, werden dann in diesem Fall die Federspeicherbremszylinder eingelegt.

Die erste monostabile Ventileinheit wird von einer ersten elektronischen Steuereinheit und die zweite monostabile Ventileinheit wird von einer zweiten elektronischen Steuereinheit geschaltet. Die erste und zweite elektronische Steuereinheit sind vorzugsweise unabhängig voneinander. Beispielsweise ist die erste elektronische Steuereinheit die Steuereinheit eines Zentralmoduls, und die zweite elektronische Steuereinheit ist die Steuereinheit eines Achsmodulators, beispielsweise Vorderachs- oder Hinterachsmodulators. Auch ist es denkbar, dass die zweite elektronische Steuereinheit die Steuereinheit eines integrierten Feststellbremsmoduls ist. Auch andere Steuereinheiten kommen infrage. Beispielsweise ist die erste elektronische Steuereinheit die eines Vorderachsbremskreises und die zweite elektronische Steuereinheit die eines Hinterachsbremskreises. Auch ist denkbar und bevorzugt, dass die erste elektronische Steuereinheit die einer Betriebsebene ist, während die zweite elektronische Steuereinheit die einer Redundanzebene ist.

Darüber hinaus ist vorzugsweise vorgesehen, dass die erste monostabile Ventileinheit von einer ersten Spannungsquelle und die zweite monostabile Ventileinheit von einer zweiten Spannungsquelle versorgt wird. Bezüglich der ersten und zweiten Spannungsquellen gilt dasselbe, was auch mit Bezug auf die ersten und zweiten elektronischen Steuereinheiten beschrieben wurde. Insofern ist bevorzugt, dass die erste Spannungsquelle beispielsweise einem Vorderachsbremskreis zugeordnet ist, und die zweite Spannungsquelle einem Hinterachsbremskreis zugeordnet ist. Die ersten und zweiten Spannungsquellen sind vorzugsweise unabhängig voneinander. Auch ist denkbar, dass die erste Spannungsquelle einer Betriebsebene zugeordnet ist und die zweite Spannungsquelle einer Redundanzebene.

Gemäß einer weiteren bevorzugten Ausführungsform weist die erste monostabile Ventileinheit ein erstes Schaltventil und ein zweites Schaltventil auf, die derart druckleitend miteinander verbunden sind, dass der erste Feststellbremsdruck nur dann ausgesteuert wird, wenn das erste und das zweite Schaltventil bestromt sind, und die zweite monostabile Ventileinheit ein drittes Schaltventil und ein viertes Schaltventil aufweist, die derart druckleitend miteinander verbunden sind, dass der zweite Feststellbremsdruck nur dann ausgesteuert wird, wenn das dritte und das vierte Schaltventil bestromt sind. Auf diese Weise kann die Sicherheit weiter erhöht werden. Bereits ein Fehler in einem der ersten und zweiten, bzw. dritten und vierten Schaltventile reicht aus, um einen der ersten und zweiten Druckluftpfade drucklos werden zu lassen. Gleichzeitig ist es erforderlich, dass beide Ventile bestromt sind, um den entsprechenden Feststellbremsdruck aussteuern zu können. Hierdurch soll sichergestellt werden, dass nicht bereits bei einem fehlerhaften Schalten von einem der Ventile oder bei einem nichtrichtigen Schalten von einem Ventil der Federspeicherdruck ausgesteuert wird, sondern nur tatsächlich dann, wenn entsprechende Schaltsignale für die ersten und zweiten bzw. dritten und vierten Schaltventile bereitgestellt werden, also sichergestellt ist, dass entsprechende übergeordnete Steuereinheiten und oder Spannungsquellen funktionsfähig sind.

Hierbei ist vorzugsweise vorgesehen, dass das erste Schaltventil als ein erstes 3/2-Wege-Ventil, das zweite Schaltventil als ein zweites 3/2-Wege-Ventil, das dritte Schaltventil als ein drittes 3/2-Wege-Ventil und das vierte Schaltventil als ein viertes 3/2-Wege-Ventil ausgebildet ist, wobei das erste und das zweite 3/2-Wege-Ventil pneumatisch in Reihe geschaltet sind und das dritte und das vierte 3/2-Wege-Ventil pneumatisch in Reihe geschaltet sind. Hierdurch wird eine besonders einfache Verschaltung erreicht, die jeweils monostabil ausgebildet ist und dazu führt, dass jeweils die in Reihe geschalteten Ventile geschaltet sein müssen, um den ersten bzw. zweiten Feststellbremsdruck auszusteuern.

Weiterhin ist bevorzugt, dass das erste Schaltventil einen den Vorratsdruck empfangenden ersten Schaltventilanschluss, einen mit dem zweiten Schaltventilanschluss verbundenen zweiten Schaltventilanschluss und einen mit einer Entlüftung verbundenen dritten Schaltventilanschluss aufweist, wobei in einer ersten bestromten Schaltstellung der erste Schaltventilanschluss mit dem zweiten Schaltventilanschluss, und in einer stromlosen zweiten Schaltstellung der zweite Schaltventilanschluss mit dem dritten Schaltventilanschluss verbunden ist. Das Gleiche gilt vorzugsweise auch für die zweiten, dritten und vierten Schaltventile. Demnach ist vorzugweise vorgesehen, dass das zweite Schaltventil einen mit dem zweiten Schaltventilanschluss verbundenen vierten Schaltventilanschluss, einen mit dem ersten Wechselventilanschluss verbundenen fünften Schaltventilanschluss und einen mit einer oder der Entlüftung verbundenen sechsten Schaltventilanschluss aufweist, wobei in einer ersten bestromten Schaltstellung der vierte Schaltventilanschluss mit dem fünften Schaltventilanschluss, und in einer stromlosen zweiten Schaltstellung der fünfte Schaltventilanschluss mit dem sechsten Schaltventilanschluss verbunden ist. Übereinstimmend ist auch für den zweiten Druckluftpfad vorzugsweise das Folgende vorgesehen. Das dritte Schaltventil weist einen den Vorratsdruck empfangenden siebten Schaltventilanschluss, einen mit dem vierten Schaltventilanschluss verbundenen achten Schaltventilanschluss und einen mit einer oder der Entlüftung verbundenen neunten Schaltventilanschluss auf, wobei in einer ersten bestromten Schaltstellung der siebte Schaltventilanschluss mit dem achten Schaltventilanschluss, und in einer stromlosen zweiten Schaltstellung der achte Schaltventilanschluss mit dem neunten Schaltventilanschluss verbunden ist. Schließlich weist vorzugsweise auch das vierte Schaltventil einen mit dem achten Schaltventil verbundenen zehnten Schaltventilanschluss, einen mit dem zweiten Wechselventilanschluss verbundenen elften Schaltventilanschluss und einen mit einer oder der Entlüftung verbundenen zwölften Schaltventilanschluss auf, wobei in einer ersten bestromten Schaltstellung der zehnte Schaltventilanschluss mit dem elften Schaltventilanschluss und in einer stromlosen zweiten Schaltstellung der elfte Schaltventilanschluss mit dem zwölften Schaltventilanschluss verbunden ist.

In einer weiter bevorzugten Ausführungsform ist vorgesehen, dass der erste Druckluftpfad zum Entlüften des ersten Wechselventilanschlusses und der zweite Druckluftpfad zum Entlüften des zweiten Wechselventilanschlusses jeweils mit einem, insbesondere einzigen, Entlüftungsventil verbunden sind. Über dieses Entlüftungsventil können dann separat von den Schaltventilen, der erste bzw. der zweite Wechselventilanschluss entlüftet werden, um so die an den dritten Wechselventilanschluss angeschlossenen Federspeicherbremszylinder zu entlüften und das Fahrzeug in der Folge zu bremsen. Vorzugsweise ist also ein einziges Entlüftungsventil sowohl für den ersten als auch für den zweiten Druckluftpfad vorgesehen. Das Entlüftungsventil ist vorzugsweise so ausgebildet, dass dieses eine nichtlineare Entlüftungscharakteristik aufweist. Vorzugsweise erlaubt das Entlüftungsventil ein Entlüften der ersten, bzw. zweiten Wechselventilanschlüsse und somit auch des dritten Wechselventilanschlusses, von einem Lösedruck, der einem Feststellbremsdruck entspricht, der zum Lösen der an den dritten Wechselventilanschluss angeschlossenen Federspeicherbremszylinder ausreicht, auf einen Teilbremsdruck mit einem ersten Gradienten, und ein Entlüften des ersten bzw. zweiten Wechselventilanschlusses von dem Teilbremsdruck auf einen Vollbremsdruck mit einem zweiten Gradienten erlaubt, wobei der erste Gradient größer als der zweite Gradient ist. Werden die Federspeicherbremszylinder auf diese Weise mit dem Entlüftungsventil entlüftet, werden diese nicht unmittelbar und sofort eingelegt, sondern mit einer nichtlinearen Entlüftungscharakteristik. Die nichtlineare Entlüftungscharakteristik ist dabei so ausgebildet, dass der erste, bzw. zweite, bzw. dritte Wechselventilanschluss zunächst von einem Lösedruck auf einen Teilbremsdruck mit einem ersten Gradienten entlüftet wird. Der Lösedruck ist vorzugsweise derjenige Druck, der mindestens erforderlich ist, um die Federspeicherbremszylinder, die an den dritten Wechselventilanschluss angeschlossen sind, vollständig zu lösen. Von diesem Lösedruck auf den Teilbremsdruck wird gemäß dieser Ausführungsform schnell entlüftet. Der Teilbremsdruck ist vorzugsweise so ausgelegt, dass das Fahrzeug nicht vollständig, sondern nur teilgebremst ist. Es soll also bereits eine Bremsung erzeugt werden, ohne dass Achsen unmittelbar blockieren. Von dem Teilbremsdruck, bei dem eine Teilbremsung ausgeführt wird, bis auf den Vollbremsdruck, bei dem die Federspeicherbremszylinder in entsprechender Weise vollständig entlüftet und somit vollständig zugespannt sind, wird mit einem zweiten Gradienten entlüftet. Der zweite Gradient ist kleiner als der erste Gradient, sodass das Bremsen von dem Teilbremsdruck auf den Vollbremsdruck langsamer erfolgt. Auf diese Weise ist es möglich, eine sichere Verzögerung des Fahrzeugs bereitzustellen und der Gefahr eines unmittelbaren Blockierens von Achsen entgegenzuwirken. Hierbei ist es nicht erforderlich, dass die ersten und zweiten Gradienten konstant sind. Vielmehr können auch die ersten und zweiten Gradienten nichtlineare Entlüftungscharakteristiken definieren. Es ist vielmehr bevorzugt, dass ein durchschnittlicher Gradient beim Entlüften des Wechselventils von dem Lösedruck auf den Teilbremsdruck größer ist, als ein durchschnittlicher Gradient beim Entlüften des Wechselventils von dem Teilbremsdruck auf den Vollbremsdruck. Vorzugsweise sind die ersten und zweiten Gradienten konstant. Vorzugsweise entspricht der erste Gradient dem 1 ,2-Fachen bis 100-Fachen, vorzugsweise dem 1 ,2-Fachen bis 20-Fachen des zweiten Gradienten.

In einer besonders bevorzugten Ausführungsform weist das Entlüftungsventil einen Druckbegrenzer und eine Drossel auf, die parallel zum Druckbegrenzer angeordnet ist und ein Überströmen des Druckbegrenzers erlaubt. Es können auch zwei oder mehr Druckbegrenzer und auch zwei oder mehr Drosseln je Druckbegrenzer vorgesehen sein. Durch Vorsehen des Druckbegrenzers und der Drossel zum Überströmen des Druckbegrenzers ist es möglich, eine nichtlineare Entlüftungscharakteristik auf einfache Art und Weise bereitzustellen. Beispielsweise wird das Entlüften des Wechselventils von dem Lösedruck auf den Teilbremsdruck vorwiegend über den Druckbegrenzer realisiert, während das Entlüften des Wechselventils vom Teilbremsdruck auf den Vollbremsdruck vorwiegend über die Drossel realisiert wird.

Gemäß einer weiteren bevorzugten Ausführungsform weist die Feststellbremsventilanordnung ferner eine Anhängerventileinheit zum Bereitstellen eines Anhängerdrucks auf. Der Anhängerdruck kann ein Anhängerfeststellbremsdruck sein, oder ein Vorratsdruck für den Anhänger, insbesondere wenn die Feststellbremsventilanordnung in einer US-Variante eines Bremssystems eingesetzt wird. Über die Anhängerventileinheit sollen nicht nur die Federspeicherbremszylinder eines Zugfahrzeugs betätigt werden können, sondern gleichzeitig auch ein Anhänger. Für den Fall, dass über die Feststellbremsventilanordnung gemäß der hier beschriebenen Ausführungsform die Federspeicherbremszylinder des Fahrzeugs eingelegt werden sollen, können sie über die Anhängerventileinheit ebenso für den Anhänger eingelegt werden. Auch der Anhänger wird also in diesem Fall gebremst.

Vorzugsweise ist die Anhängerventileinheit mit dem ersten und dem zweiten Druckluftpfad verbunden. Auf diese Weise kann sie dieselbe Funktionalität erfahren, wie auch das Wechselventil.

Ferner ist bevorzugt, dass die Anhängerventileinheit einen ersten Anhängervordruck von dem ersten Druckluftpfad und einen zweiten Anhängervordruck von dem zweiten Druckluftpfad empfängt, und den jeweils höheren als Anhängerdruck aussteuert. Der über den ersten und zweiten Druckluftpfad ausgesteuerte Druck wird so nicht nur zum Betätigen der Federspeicherbremszylinder des Zugfahrzeugs verwendet, sondern kann auch über die Anhängerventileinheit zum Bremsen des Anhängers verwendet werden.

In diesem Rahmen ist es bevorzugt, dass die Anhängerventileinheit ein mit dem ersten Druckluftpfad verbundenes erstes monostabiles Anhängerschaltventil und ein mit dem zweiten Druckluftpfad verbundenes zweites monostabiles Anhängerschaltventil aufweist. Auch die Anhängerventileinheit ist so monostabil ausgebildet und kann in Übereinstimmung mit den monostabilen ersten und zweiten Druckluftpfaden gesteuert werden.

Ferner ist bevorzugt vorgesehen, dass das erste Anhängerschaltventil als erstes 3/2-Wege-Anhängerschaltventil, und das zweite Anhängerschaltventil als zweites 3/2-Wege-Anhängerschaltventil ausgebildet ist. Insofern sind die ersten und zweiten Anhängerschaltventile in Übereinstimmung mit den Schaltventilen der ersten und zweiten monostabilen Ventileinheiten ausgebildet. Hier können Gleichteile verwendet werden, sodass Kosten reduziert werden können.

Vorzugsweise ist vorgesehen, dass das das erste Anhängerschaltventil einen mit dem zweiten Schaltventilanschluss verbundenen ersten Anhängerschaltventilanschluss, einen mit einem zweiten Wechselventil verbundenen zweiten Anhängerschaltventilanschluss und einen mit einer oder der Entlüftung verbundenen dritten Anhängerschaltventilanschluss aufweist. Das zweite Anhängerschaltventil weist vorzugsweise einen mit dem achten Schaltventilanschluss verbundenen vierten Anhängerschaltventilanschluss, einen mit einem zweiten Wechselventil verbundenen fünften Anhängerschaltventilanschluss und einen mit einer oder der Entlüftung verbundenen sechsten Anhängerschaltventilanschluss auf. Auf diese Weise sind die ersten und zweiten Anhängerschaltventile mit den ersten und zweiten Druckluftpfaden verbunden, und ihrerseits dann wiederum mit einem zweiten Wechselventil, analog zu den Schaltventilen der ersten und zweiten monostabilen Ventileinheiten. Wiederum wird über das zweite Wechselventil der jeweils höhere des daran ausgesteuerten Drucks weitergeleitet, in diesem Fall konkret an den Anhänger. Auf diese Weise wird wiederum dieselbe Funktionalität, die bereits für den Zugwagen vorgesehen ist, auch für den Anhänger umgesetzt.

In einem zweiten Aspekt wird die eingangs genannte Aufgabe bei einem elektronisch steuerbaren pneumatischen Bremssystem für ein Fahrzeug, insbesondere Nutzfahrzeug, mit einer ersten elektronischen Steuereinheit und einer zweiten elektronischen Steuereinheit, wobei die erste und die zweite elektronische Steuereinheit so ausgelegt sind, dass sie sich im Fehlerfall wenigstens teilweise wechselseitig ersetzen können, gelöst durch eine Feststellbremsventilanordnung nach einer der vorstehend beschriebenen bevorzugten Ausführungsformen einer Feststellbremsventilanordnung gemäß dem ersten Aspekt der Erfindung, wobei die erste elektronische Steuereinheit mit der ersten monostabilen Ventileinheit zum Bereitstellen von ersten Schaltsignalen an dieser verbunden ist, und die zweite elektronische Steuereinheit mit der zweiten monostabilen Ventileinheit zum Bereitstellen von zweiten Schaltsignalen an dieser verbunden ist. Es soll verstanden werden, dass die Feststellbremsventilanordnung gemäß dem ersten Aspekt der Erfindung sowie das elektronisch steuerbare pneumatische Bremssystem gemäß dem zweiten Aspekt der Erfindung gleiche und ähnliche Unteraspekte aufweisen, wie sie insbesondere in den abhängigen Ansprüchen niedergelegt sind. Insofern wird vollumfänglich auf die obige Beschreibung Bezug genommen.

Für den Fall, dass eine Anhängerventileinheit vorgesehen ist, ist bei dem elektronisch steuerbaren pneumatischen Bremssystem gemäß dem zweiten Aspekt der Erfindung vorzugsweise ferner vorgesehen, dass das erste Anhängerschaltventil von der zweiten elektronischen Steuereinheit und das zweite Anhängerschaltventil von der ersten elektronischen Steuereinheit gesteuert werden und von diesen entsprechend weitere Schaltsignale bereitgestellt werden. Hierdurch kann eine Überkreuzschaltung erreicht werden. Alternativ ist es auch bevorzugt, dass das erste Anhängerschaltventil von der ersten elektronischen Steuereinheit und das zweite Anhängerschaltventil von der zweiten elektronischen Steuereinheit gesteuert werden.

In einem dritten Aspekt wird die eingangs genannte Aufgabe gelöst durch ein Fahrzeug, insbesondere Nutzfahrzeug, mit einem elektronisch steuerbaren pneumatischen Bremssystem gemäß einer der vorstehend beschriebenen bevorzugten Ausführungsformen eines elektronisch steuerbaren pneumatischen Bremssystems gemäß dem zweiten Aspekt der Erfindung. Es soll verstanden werden, dass auch das Fahrzeug gemäß dem dritten Aspekt der Erfindung gleiche oder ähnliche Unteraspekte mit den ersten beiden Aspekten der Erfindung aufweist. Insofern wird vollumfänglich auf die obige Beschreibung Bezug genommen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: ein erstes Ausführungsbeispiel einer Feststellbremsventilanordnung;
- Fig. 2: ein zweites Ausführungsbeispiel einer Feststellbremsventilanordnung;
- Fig. 3: eine Darstellung einer nichtlinearen Entlüftungscharakteristik;
- Fig. 4: ein drittes Ausführungsbeispiel einer Feststellbremsventilanordnung; und
- Fig. 5: ein elektronisch steuerbares pneumatisches Bremssystem.

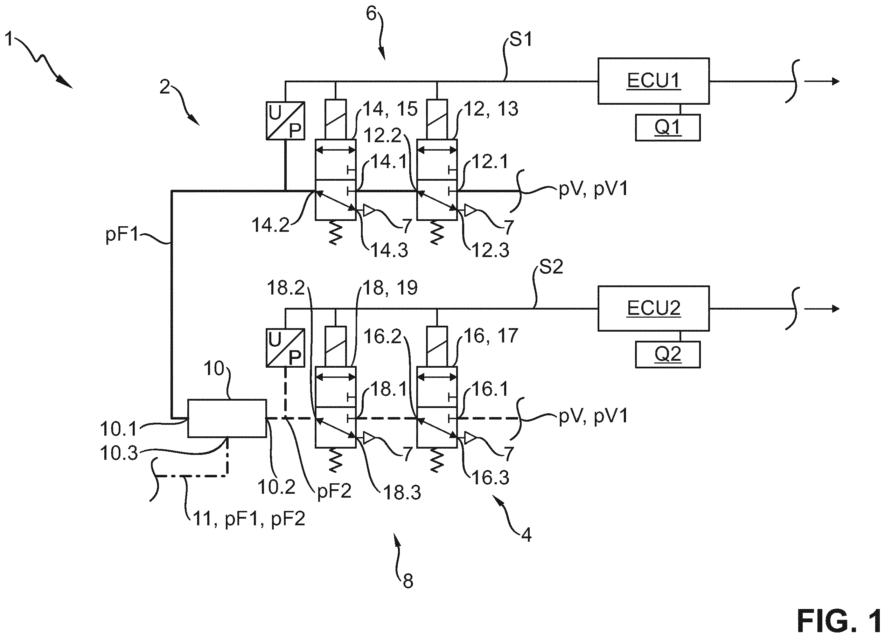

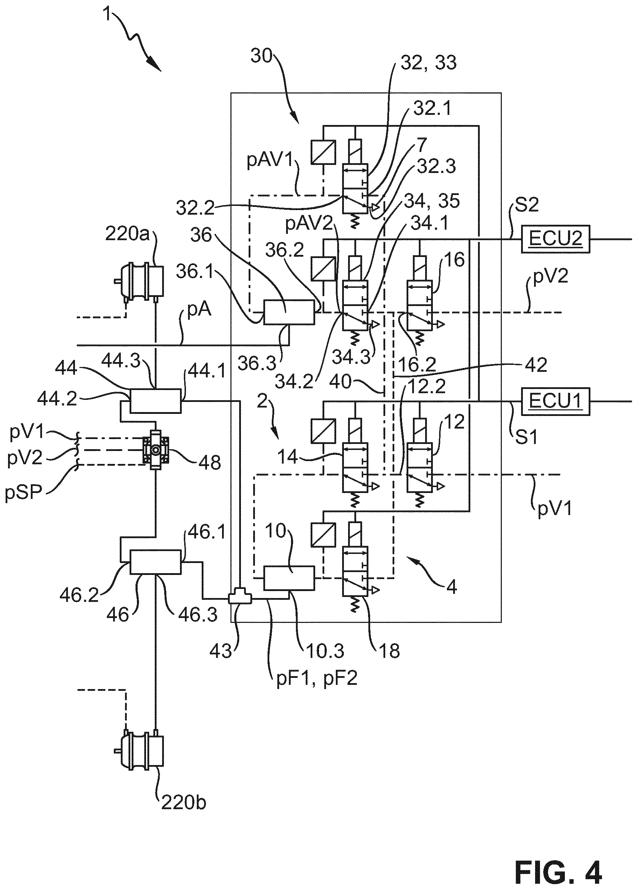

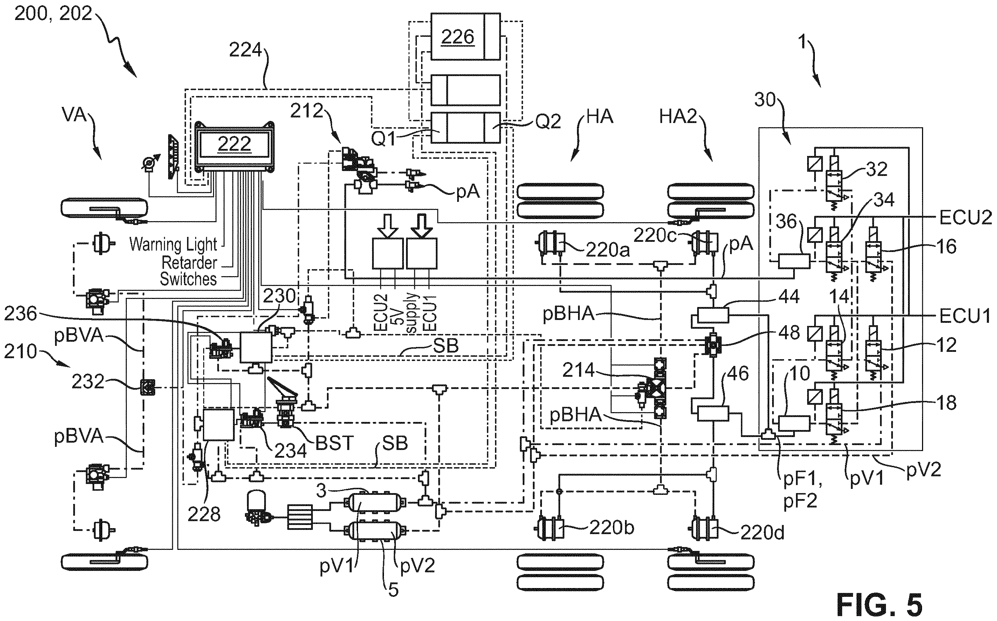

Eine Feststellbremsventilanordnung 1 (vgl. Fig. 1) für ein elektronisch steuerbares pneumatisches Bremssystem 210 (vgl. Fig. 5) eines Fahrzeugs 200, insbesondere Nutzfahrzeug 202 weist einen ersten Druckluftpfad 2 und einen zweiten Druckluftpfad 4 auf. Sowohl der erste als auch der zweite Druckluftpfad 2, 4 werden mit Vorratsdruck pV versorgt. Es kann auch vorgesehen sein, dass der erste Druckluftpfad 2 mit einem ersten Vorratsdruck pV1 und der zweite Druckluftpfad 4 mit einem zweiten Vorratsdruck pV2 versorgt werden, wie dies beispielsweise mit Bezug auf Fig. 5 noch genauer erläutert werden wird. In dem ersten Druckluftpfad 2 ist eine erste monostabile Ventileinheit 6 angeordnet und in dem zweiten Druckluftpfad 4 ist eine zweite monostabile Ventileinheit 8 angeordnet. Mittels Schalten der ersten bzw. zweiten monostabilen Ventileinheiten 6, 8 lassen sich entsprechende Drücke aussteuern. So kann in dem ersten Druckluftpfad 2 durch Schalten der ersten monostabilen Ventileinheit 6 ein erster Feststellbremsdruck pF1 ausgesteuert werden und in dem zweiten Druckluftpfad 4 kann durch Schalten der zweiten monostabilen Ventileinheit 8 ein zweiter Feststellbremsdruck pF2 ausgesteuert werden. Die ersten und zweiten Druckluftpfade 2, 4 sind mit einem ersten Wechselventil 10 verbunden, das dazu ausgebildet ist, den jeweils höheren des ersten Feststellbremsdrucks pF1 und des zweiten Feststellbremsdrucks pF2 in eine Feststellbremsdruckleitung 11 auszusteuern. Die Feststellbremsdruckleitung 11 kann dann ihrerseits mittelbar oder unmittelbar mit Federspeicherbremszylindern 220a, 220b, 220c, 220d verbunden sein, wie dies grundsätzlich mit Bezug auf die Figuren 4 und 5 gezeigt ist und später, weiter unten, erläutert werden wird.

Das erste Wechselventil 10 ist als sogenanntes Select-High-Ventil ausgebildet und weist einen ersten Wechselventilanschluss 10.1 auf, der mit dem ersten Druckluftpfad 2 zum Empfangen des ersten Feststellbremsdrucks pF1 verbunden ist, einen zweiten Wechselventilanschluss 10.2, der mit dem zweiten Druckluftpfad 4 zum Empfangen des zweiten Feststellbremsdrucks pF2 verbunden ist sowie einen dritten Wechselventilanschluss 10.3, der zum Aussteuern des jeweils höheren des ersten und zweiten Feststellbremsdrucks pF1, pF2 ausgebildet und zu diesem Zweck mit der Feststellbremsdruckleitung 11 verbunden ist.

Die erste monostabile Ventileinheit 6 weist in diesem Ausführungsbeispiel ein erstes Schaltventil 12 und ein zweites Schaltventil 14 auf. Beide Schaltventile 12, 14 sind monostabil ausgebildet und jeweils stromlos in der in Fig. 1 gezeigten ersten Schaltstellung, in der sie den ersten Druckluftpfad 2 und damit auch den ersten Wechselventilanschluss 10.1 entlüften. Genauer gesagt, ist das erste Schaltventil 12 als erstes 3/2-Wege-Ventil 13 ausgebildet. Das erste Schaltventil 12 weist einen ersten Schaltventilanschluss 12.1 auf, der Vorratsdruck pV, bzw. den ersten Vorratsdruck pV1, empfängt, einen zweiten Schaltventilanschluss 12.2 sowie einen dritten Schaltventilanschluss 12.3, der mit einer Entlüftung 7 verbunden ist. Der zweite Schaltventilanschluss 12.2 ist mit dem zweiten Schaltventil 14 verbunden. Das zweite Schaltventil 14 ist als zweites 3/2-Wege-Ventil 15 ausgebildet. Das zweite Schaltventil 14 weist einen vierten Schaltventilanschluss 14.1 auf, der mit dem zweiten Schaltventilanschluss 12.2 verbunden ist und den von diesem ausgesteuerten Druck empfängt, einen fünften Schaltventilanschluss 14.2 sowie einen sechsten Schaltventilanschluss 14.3, der wiederum mit einer oder der Entlüftung 7 verbunden ist. Der fünfte Schaltventilanschluss 14.2 ist in der in Fig. 1 gezeigten Ausführungsform unmittelbar über eine entsprechende Leitung mit dem ersten Wechselventilanschluss 10.1 verbunden. Es kann aber auch vorgesehen sein, dass dort weitere Elemente vorhanden sind, sodass der fünfte Schaltventilanschluss 14.2 nur mittelbar mit dem ersten Wechselventilanschluss 10.1 verbunden ist. Die ersten und zweiten Schaltventile 12, 14 sind pneumatisch in Reihe geschaltet.

Beide Schaltventile, das erste und das zweite Schaltventil 12, 14, sind mit einer ersten elektronischen Steuereinheit ECU1 verbunden, die an diesen ein erstes Schaltsignal S1 bereitstellt. Das heißt, die ersten und zweiten Schaltventile 12, 14 werden gemeinsam geschaltet und empfangen dasselbe erste Schaltsignal S1. In der ersten stromlosen Schaltstellung des ersten Schaltventils 12 ist der zweite Schaltventilanschluss 12.2 mit dem dritten Schaltventilanschluss 12.3 verbunden, sodass der Vorratsdruck pV nicht durch das erste Schaltventil 12 durchgesteuert werden kann. Erst wenn das erste Schaltventil 12 von der in Fig. 1 gezeigten ersten Schaltstellung in die in Fig. 1 nicht gezeigte zweite Schaltstellung schaltet, in der der erste Schaltventilanschluss 12.1 mit dem zweiten Schaltventilanschluss 12.2 verbunden ist, kann der Vorratsdruck pV von dem ersten Schaltventilanschluss 12.1 zum zweiten Schaltventilanschluss 12.2 durchgesteuert werden und entsprechend an dem vierten Schaltventilanschluss 14.1 bereitgestellt werden. Wenn jedoch das zweite Schaltventil 14 ebenfalls in der ersten in Fig. 1 gezeigten stromlosen Schaltstellung ist, wird wiederum kein Druck an dem ersten Wechselventilanschluss 10.1 ausgesteuert, da der vierte Schaltventilanschluss 14.1 geschlossen ist und vielmehr der fünfte Schaltventilanschluss 14.2 mit dem sechsten Schaltventilanschluss 14.3 verbunden ist, sodass der erste Wechselventilanschluss 10.1 über das zweite Schaltventil 14 mit einer oder der Entlüftung 7 verbunden ist. Erst, wenn das zweite Schaltventil 14 auch in die in Fig. 1 nicht gezeigte zweite Schaltstellung schaltet, und so der vierte Schaltventilanschluss 14.1 mit dem fünften Schaltventilanschluss 14.2 verbunden wird, wird der vom ersten Schaltventil 12 ausgesteuerte Druck durch das zweite Schaltventil 14 weitergeleitet und als erster Feststellbremsdruck pF1 an dem ersten Wechselventilanschluss 10.1 ausgesteuert. Das heißt, sowohl das erste als auch das zweite Schaltventil 12, 14 müssen geschaltet werden, um den ersten Feststellbremsdruck pF1 an dem ersten Wechselventilanschluss 10.1 auszusteuern.

Der zweite Druckluftpfad 4 ist analog aufgebaut, sodass hier entsprechend das oben bereits mit Bezug auf den ersten Druckluftpfad 2 Gesagte entsprechend gilt.

Beide Schaltventile in dem zweiten Druckluftpfad 4 in der zweiten monostabilen Ventileinheit 8, das dritte und das vierte Schaltventil 16, 18, sind mit einer zweiten elektronischen Steuereinheit ECU2 verbunden, die an diesen ein zweites Schaltsignal S2 bereitstellt. Das heißt, die dritten und vierten Schaltventile 16, 18 werden gemeinsam geschaltet und empfangen dasselbe zweite Schaltsignal S2. In der ersten stromlosen Schaltstellung des dritten Schaltventils 16 ist der achte Schaltventilanschluss 16.2 mit dem neunten Schaltventilanschluss 16.3 verbunden, sodass der Vorratsdruck pV nicht durch das dritte Schaltventil 16 durchgesteuert werden kann. Erst wenn das dritte Schaltventil 16 von der in Fig. 1 gezeigten ersten Schaltstellung in die in Fig. 1 nicht gezeigte zweite Schaltstellung schaltet, in der der siebte Schaltventilanschluss 16.1 mit dem achten Schaltventilanschluss 16.2 verbunden ist, kann der Vorratsdruck pV von dem siebte Schaltventilanschluss 16.1 zum achten Schaltventilanschluss 16.2 durchgesteuert werden und entsprechend an dem zehnten Schaltventilanschluss 18.1 bereitgestellt werden. Wenn jedoch das vierte Schaltventil 18 ebenfalls in der ersten in Fig. 1 gezeigten stromlosen Schaltstellung ist, wird wiederum kein Druck an dem zweiten Wechselventilanschluss 10.2 ausgesteuert, da der zehnte Schaltventilanschluss 18.1 geschlossen ist und vielmehr der elfte Schaltventilanschluss 18.2 mit dem zwölften Schaltventilanschluss 18.3 verbunden ist, sodass der zweite Wechselventilanschluss 10.2 über das vierte Schaltventil 18 mit einer oder der Entlüftung 7 verbunden ist. Erst, wenn das vierte Schaltventil 18 auch in die in Fig. 1 nicht gezeigte zweite Schaltstellung schaltet, und so der zehnte Schaltventilanschluss 18.1 mit dem elften Schaltventilanschluss 18.2 verbunden wird, wird der vom dritten Schaltventil 16 ausgesteuerte Druck durch das vierte Schaltventil 18 weitergeleitet und als zweiter Feststellbremsdruck pF2 an dem zweiten Wechselventilanschluss 10.2 ausgesteuert. Das heißt, sowohl das dritte als auch das vierte Schaltventil 16, 18 müssen geschaltet werden, um den zweiten Feststellbremsdruck pF2 an dem zweiten Wechselventilanschluss 10.2 auszusteuern.

Die erste elektronische Steuereinheit ECU1 und die zweite elektronische Steuereinheit ECU2 sind vorzugsweise unabhängig voneinander und beispielsweise zwei verschiedenen Modulen innerhalb des elektronisch steuerbaren pneumatischen Bremssystems 210 zugeordnet. Vorzugsweise wird die erste elektronische Steuereinheit ECU1 von einer ersten Spannungsquelle Q1 versorgt und die zweite elektronische Steuereinheit ECU2 wird von einer zweiten Spannungsquelle Q2 versorgt. Auch die ersten und zweiten Spannungsquellen Q1, Q2 sind vorzugsweise unabhängig voneinander.

Auf diese Weise kann sichergestellt werden, dass, solange einer der ersten und zweiten elektronischen Steuereinheit ECU1, ECU2, bzw. einer der ersten und zweiten Spannungsquellen Q1, Q2 ordnungsgemäß funktioniert, wenigstens einer des ersten und des zweiten Feststellbremsdruck pF1, pF2 ausgesteuert werden, sodass am dritten Wechselventilanschluss 10.3 bei Funktionsfähigkeit von einer der zwei elektronischen Steuereinheiten ECU1, ECU2 ein Feststellbremsdruck pF1, pF2 ausgesteuert wird, sodass in diesem Fall in der Folge die Federspeicherbremszylinder 220a bis 220d gelöst bleiben. Erst wenn sowohl die erste elektronische Steuereinheit ECU1, bzw. erste Spannungsquelle Q1 und die zweite elektronische Steuereinheit ECU2, bzw. zweite Spannungsquelle Q2 ausfallen und somit sowohl das erste als auch das zweite Schaltsignal S2 nicht mehr oder nicht mehr korrekt bereitgestellt werden, werden sowohl der erste als auch der zweite Druckluftpfad 2, 4 entlüftet und in der Folge werden auch die Federspeicherbremszylinder 220a bis 220d entlüftet und das Fahrzeug 200 gebremst.

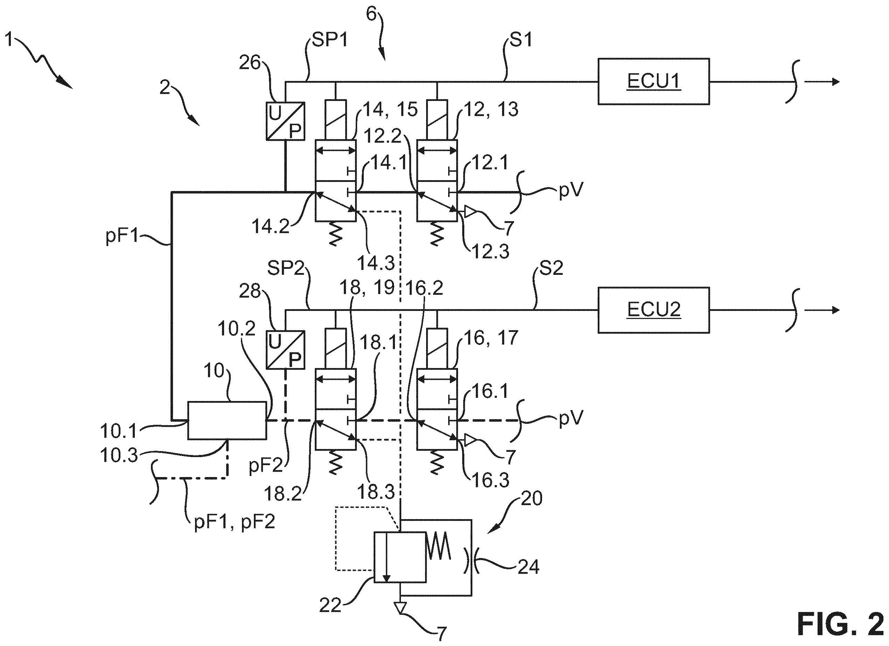

Fig. 2 illustriert nun ein zweites Ausführungsbeispiel der Feststellbremsventilanordnung 1, wobei gleiche und ähnliche Elemente mit den gleichen Bezugszeichen wie in Fig. 1 bezeichnet sind. Insofern wird vollumfänglich auf die obige Beschreibung Bezug genommen. Im Folgenden werden insbesondere die Unterschiede zum ersten Ausführungsbeispiel (Fig. 1) hervorgehoben.

Der maßgebliche Unterschied im zweiten Ausführungsbeispiel im Vergleich zum ersten Ausführungsbeispiel (Fig. 1) ist, dass ein Entlüftungsventil 20 vorgesehen ist.

Das Entlüftungsventil 20 ist in dem in Fig. 2 gezeigten Ausführungsbeispiel aus einen Druckbegrenzer 22 mit einer parallel dazu angeordneten Drossel 24 gebildet, die ein Überströmen des Druckbegrenzers 22 erlaubt. Der Druckbegrenzer 22 selbst ist dann wiederum mit einer oder der Entlüftung 7 verbunden.

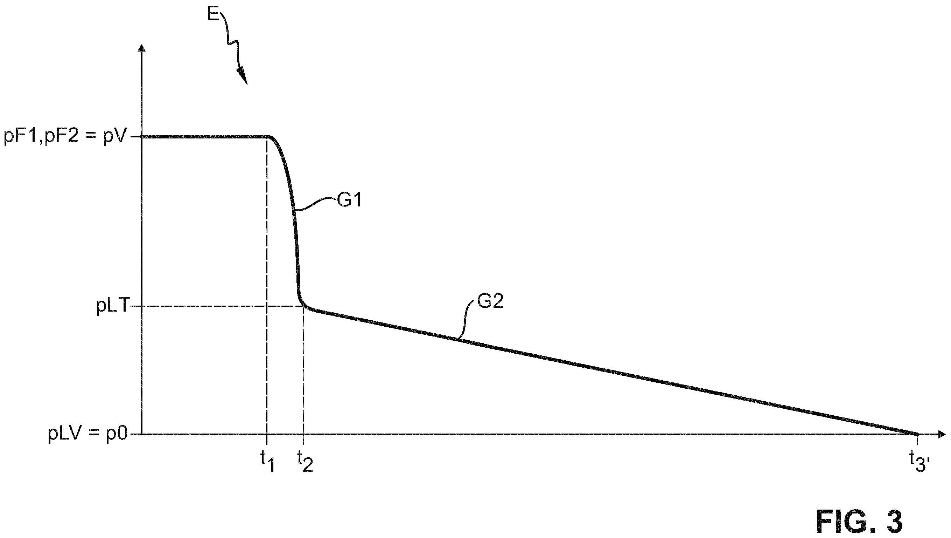

Die Kombination in dem Entlüftungsventil 20 mit Druckbegrenzer 22 und Drossel 24 erlaubt es, auf einfache Art und Weise eine nichtlineare Entlüftungscharakteristik E (vgl. Fig. 3) umzusetzen. Für den Fall, dass in dem elektronisch steuerbaren pneumatischen Bremssystem 210 ein Fehler auftritt und infolgedessen die erste und zweite elektronische Steuereinheit ECU1, ECU2 ausfällt, sodass das erste und das zweite Schaltsignal S1, S2 nicht mehr bereitgestellt werden, wird der erste und zweite Druckluftpfad 2, 4 über das zweite Schaltventil 14 und das dritte Schaltventil 18 mit dem Entlüftungsventil 20 verbunden und so entlüftet. Der Druckbegrenzer 22 lässt dann zunächst ein Entlüften auf einen Teilbremsdruck pLT mit einem Gradienten G1 zu (vgl. Fig. 3) und, sobald der Grenzdruck, in diesem Fall der Teilbremsdruck pLT, erreicht ist, wird eine restliche Entlüftung der ersten und zweiten Wechselventilanschlüsse 10.1, 10.2 bis auf einen Vollbremsdruck pLV, der vorzugsweise dem Umgebungsdruck entsprechen kann, über die Drossel 24 realisiert, wobei dies mit einem zweiten Gradienten G2 erfolgt.

Wie sich insbesondere aus Fig. 3 entnehmen lässt, ist der erste Gradient G1 deutlich größer als der zweite Gradient G2. Zu dem Zeitpunkt t1, zu dem sowohl die erste als auch die zweite elektronische Steuereinheit ECU1, ECU2 ausfallen, und die ersten und zweiten Schaltsignale S1, S2 nicht mehr bereitgestellt werden, wird der dritte Wechselventilanschluss 10.3 mit dem ersten Gradienten G1 entlüftet, wobei der Druck von dem ersten bzw. zweiten Feststellbremsdruck pF1, pF2, die dem Vorratsdruck pV entsprechen können, auf den Teilbremsdruck pLT abfällt. Ist dieser erreicht (Zeitpunkt t2), fällt der Druck von dem Teilbremsdruck pLT auf den Vollbremsdruck pLV mit dem zweiten Gradienten G2 ab. Erst zum Zeitpunkt t3 ist dann der Vollbremsdruck pLV erreicht. Wie sich leicht aus Fig. 3 entnehmen lässt, ist der Abstand zwischen dem zweiten Zeitpunkt t2 und dem dritten Zeitpunkt t3 deutlich größer als der Abstand zwischen dem ersten Zeitpunkt t1 und dem zweiten Zeitpunkt t2, nämlich in etwa 15,5-mal so lange. Wie sich ebenfalls aus Fig. 3 ergibt, ist der erste Gradient G1 in etwa 20-mal so groß wie der zweite Gradient G2, wobei der erste Gradient G1 ebenfalls nichtlinear und der zweite Gradient G2 im Wesentlichen linear ist. Der erste Gradient G1 ist vielmehr nach einer Exponentialfunktion gebildet, wobei der durchschnittliche Wert des ersten Gradienten G1 in dem in Fig. 3 gezeigten Beispiel in etwa 4,2 beträgt. Auch andere Größen und Verhältnisse sind bevorzugt, wie beispielsweise ein Faktor von 10 oder größer. Wichtig ist, dass von dem ersten bzw. zweiten Feststellbremsdruck pF1, pF2 auf den Teilbremsdruck pLT rasch entlüftet wird, um schnell eine Teilbremsung und somit eine Teilverzögerung des Fahrzeugs 200 zu erreichen, dann aber von dem Teilbremsdruck pLT auf den Vollbremsdruck pLV langsam entlüftet wird, um ein Blockieren von Achsen VA, HA und ein unkontrolliertes Verzögern des Fahrzeugs 200 zu verhindern.

In den Figuren 1 und 2 sind ferner erste und zweite Drucksensoren 26, 28 zu sehen. Der erste Drucksensor 26 ist zwischen dem zweiten Schaltventil 14 und dem ersten Wechselventil 10 angeordnet und erfasst somit den ersten Feststellbremsdruck pF1, der von dem zweiten Schaltventil 14 ausgesteuert wird. Der zweite Drucksensor 28 ist zwischen dem vierten Schaltventil 18 und dem ersten Wechselventil 10 angeordnet und erfasst somit den zweiten Feststellbremsdruck pF2, der von dem vierten Schaltventil 18 ausgesteuert wird. Der erste Drucksensor 26 stellt ein erstes Drucksignal SP1 an der ersten elektronischen Steuereinheit ECU1 bereit, und der zweite Drucksensor 28 stellt ein zweites Drucksignal SP2 an der zweiten elektronischen Steuereinheit ECU2 bereit. Auf diese Weise können die ersten und zweiten elektronischen Steuereinheit ECU1, ECU2 ermitteln, ob die ersten und zweiten Schaltventile 12, 14 bzw. dritten und vierten Schaltventile 16, 18 korrekt funktionieren und bei Aussteuerung der ersten bzw. zweiten Schaltsignale S1, S2 tatsächlich der erste bzw. zweite Feststellbremsdruck pF1, pF2 ausgesteuert wird.

Fig. 4 illustriert ein drittes Ausführungsbeispiel der Feststellbremsventilanordnung 1. Wiederum sind gleiche und ähnliche Elemente mit den gleichen Bezugszeichen wie in den ersten beiden Ausführungsbeispielen (Fig. 1, Fig. 2) bezeichnet, sodass vollumfänglich auf die obige Beschreibung Bezug genommen wird. Auch im Folgenden werden insbesondere die Unterschiede zu den ersten beiden Ausführungsbeispielen (Fig. 1, Fig. 2) erläutert.

Der maßgebliche Unterschied im dritten Ausführungsbeispiel (Fig. 4) in Bezug auf das erste Ausführungsbeispiel (Fig. 1) liegt darin, dass eine Anhängerventileinheit 30 vorgesehen ist. Die Anhängerventileinheit 30 dient dazu, einen Anhängerdruck pA auszusteuern, der dann über ein Anhängersteuerventil 212 einem an diesem angeschlossenen Anhängers (nicht gezeigt) bereitgestellt werden kann. Hierdurch soll der Anhänger dann in Übereinstimmung mit dem Zugfahrzeug gebremst werden. Da Anhänger teilweise keine Federspeicherbremszylinder aufweisen, sondern aktiv durch einen positiven Bremsdruck gebremst werden müssen, kann es erforderlich sein, dass in dem Anhängersteuerventil 212 ein Inverter vorgesehen ist. Diese Ausführungen sind aber grundsätzlich bekannt und werden im weiteren Verlauf nicht weiter vertieft.

Die Anhängerventileinheit 30 ist gemäß dem in Fig. 4 gezeigten dritten Ausführungsbeispiel in die Feststellbremsventilanordnung 1 integriert. Grundsätzlich soll hierbei verstanden werden, dass dazu keine komplette Aufdopplung der Ventile der ersten und zweiten Ausführungsbeispiele (Fig. 1, Fig. 2) erforderlich ist, sondern insgesamt nur sechs Schaltventile verwendet werden, sodass in Bezug auf eine vollständige Aufdopplung zwei Ventile eingespart werden können. Dazu ist die Anhängerventileinheit 30 auch in die ersten und die zweiten Druckluftpfade 2, 4 integriert.

Im Einzelnen werden die ersten und dritten Schaltventile 12, 16 als gemeinsame Schaltventile sowohl für den Feststellbremsdruck pF1, pF2 als auch für den Anhängerdruck pA verwendet. Zwischen dem ersten und zweiten Schaltventil 12, 14 im ersten Druckluftpfad 2 zweigt dann eine erste Anhängervorsteuerleitung 40 ab, die zu einem ersten monostabilen Anhängerschaltventil 32 führt. In analoger Weise zweigt zwischen dem dritten und vierten Schaltventil 16, 18 eine zweite Anhängervorsteuerleitung ab, die zu einem zweiten monostabilen Anhängerschaltventil 34 führt. Das erste monostabile Anhängerschaltventil 32 ist also dem ersten Druckluftpfad 2 zugeordnet und das zweite monostabile Anhängerschaltventil 34 ist dem zweiten Druckluftpfad 4 zugeordnet.

Das erste monostabile Anhängerschaltventil empfängt demnach den vom ersten Schaltventil 12 ausgesteuerten Druck, wenn dieses von der ersten in Fig. 4 gezeigten Schaltstellung in die zweite, in Fig. 4 nicht gezeigte, Schaltstellung schaltet. Wenn auch das erste monostabile Anhängerschaltventil 32 von der ersten in Fig. 4 gezeigten Schaltstellung in die zweite, in Fig. 4 nicht gezeigte, Schaltstellung schaltet, steuert dieses einen Druck aus, der dann an einem zweiten Wechselventil 36 bereitgestellt wird. In analoger Weise empfängt das zweite monostabile Anhängerschaltventil 34 den vom dritten Schaltventil 16 ausgesteuerten Druck und, wenn das zweite monostabile Anhängerschaltventil 34 in die zweite, in Fig.4 nicht gezeigte, Schaltstellung schaltet, steuert es diesen vom dritten Schaltventil 16 empfangenen Druck an dem zweiten Wechselventil 36 aus. Das zweite Wechselventil 36 steuert dann wiederum den höheren des ersten und zweiten Anhängevordrucks pAV1, pAV2 als Anhängerdruck pA aus.

Genauer ist das erste monostabile Anhängerschaltventil 32 als erstes 3/2-Wege-Anhängerschaltventil 33 ausgebildet. Es weist einen ersten Anhängerschaltventilanschluss 32.1 auf, der mit der ersten Anhängervorsteuerleitung 40 verbunden ist, einen zweiten Anhängerschaltventilanschluss 32.2, der mit dem zweiten Wechselventil 36 verbunden ist, genauer gesagt mit einem vierten Wechselventilanschluss 36.1, und einen dritten Anhängerschaltventilanschluss 32.3, der mit einer oder der Entlüftung 7 verbunden ist. In der in Fig. 4 gezeigten ersten stromlosen Schaltstellung verbindet das erste monostabile Anhängerschaltventil 32 den zweiten Anhängerschaltventilanschluss 32.2 mit dem dritten Anhängerschaltventilanschluss 32.3, sodass der vierte Wechselventilanschluss 36.1 entlüftet ist. In der zweiten, in Fig. 4 nicht gezeigten Schaltstellung, wird der erste Anhängerschaltventilanschluss 32.1 mit dem zweiten Anhängerschaltventilanschluss 32.2 verbunden, sodass der erste Anhängervordruck pAV1 ausgesteuert wird.

In analoger Weise ist das zweite monostabile Anhängerschaltventil 34 als zweites 3/2-Wege-Anhängerschaltventil 35 ausgebildet. Es weist einen vierten Anhängerschaltventilanschluss 34.1 auf, der mit der zweiten Anhängervorsteuerleitung 32 verbunden ist. Darüber hinaus weist es einen fünften Anhängerschaltventilanschluss 34.2 auf, der mit dem zweiten Wechselventil 36, genauer gesagt mit einem fünften Wechselventilanschluss 36.2 verbunden ist sowie einen sechsten Anhängerschaltventilanschluss 34.3, der mit einer oder der Entlüftung 7 verbunden ist. Wiederum ist in der ersten in Fig. 4 gezeigten stromlosen Schaltstellung des zweiten monostabilen Anhängerschaltventils 34 der fünfte Anhängerschaltventilanschluss 34.2 mit dem sechsten Anhängerschaltventilanschluss 34.3 verbunden, sodass der fünfte Wechselventilanschluss 36.2 entlüftet ist. In der zweiten, in Fig. 4 nicht gezeigten, Schaltstellung des zweiten monostabilen Anhängerschaltventils 34 ist der vierte Anhängerschaltventilanschluss 34.1 mit dem fünften Anhängerschaltventilanschluss 34.2 verbunden, sodass der zweite Anhängervordruck pAV2 an dem fünften Wechselventilanschluss 36.2 ausgesteuert wird. Das zweite Wechselventil 36 steuert dann den höheren des ersten Anhängervordrucks pAV1, der an dem vierten Wechselventilanschluss 36.1 anliegt und dem zweiten Anhängervordruck pAV2, der an dem fünften Wechselventilanschluss 36.2 anliegt, an einem sechsten Wechselventilanschluss 36.3 aus, nämlich als Anhängerdruck pA.

Die ersten und zweiten monostabilen Anhängerschaltventile 32, 34 sind auch mit den ersten und zweiten elektronischen Steuereinheiten ECU1, ECU2 in Übereinstimmung mit den ersten und zweiten monostabilen Ventileinheiten 6, 8 verbunden. Insofern wird das erste monostabile Anhängerschaltventil 32, das dem ersten Druckluftpfad 2 zugeordnet ist, auch von der ersten elektronischen Steuereinheit ECU1 gesteuert und durch das erste Schaltsignal S1 geschaltet. In analoger Weise wird das zweite monostabile Anhängerschaltventil 34, das dem zweiten Druckluftpfad 4 zugeordnet ist, von der zweiten elektronischen Steuereinheit ECU2 gesteuert, und zwar mittels des zweiten Schaltsignals S2. In Fig. 4 ist eine weitere Besonderheit zu sehen, die nun im Folgenden beschrieben wird.

Dem ersten Wechselventil 10 pneumatisch nachgeschaltet sind dritte und vierte Wechselventile 44, 46. Genauer gesagt, ist der dritte Wechselventilanschluss 10.3, an den jeweils der höhere des ersten und zweiten Feststellbremsdrucks pF1, pF2 ausgesteuert wird, über ein T-Stück 34 sowohl mit einem siebten Wechselventilanschluss 44.1 des dritten Wechselventils 44 verbunden als auch mit einem zehnten Wechselventilanschluss 46.1 des vierten Wechselventils 46. Das dritte Wechselventil 44 weist ferner einen achten Wechselventilanschluss 44.2 sowie einen neunten Wechselventilanschluss 44.3 auf. Das dritte Wechselventil ist als Select-High-Ventil ausgebildet und steuert den jeweils höheren Druck, der an dem siebten und achten Wechselventilanschluss 44.1, 44.2 anliegt an dem neunten Wechselventilanschluss 44.3 aus. Der neunte Wechselventilanschluss 44.3 ist mit dem Federspeicherbremszylinder 220a verbunden, um diesen zu be- bzw. entlüften.

In analoger Weise weist das vierte Wechselventil neben dem zehnten Wechselventilanschluss 46.1 auch einen elften Wechselventilanschluss 46.2 sowie eine zwölften Wechselventilanschluss 46.3 auf, wobei das vierte Wechselventil 46 dazu ausgebildet ist, den jeweils höheren des an dem zehnten und elften Wechselventilanschluss 46.1, 46.2 anliegenden Druck an dem zwölften Wechselventilanschluss 46.3 auszusteuern. Der zwölfte Wechselventilanschluss 46.3 ist mit einem Federspeicherbremszylinder 220b verbunden, um diese zu be- bzw. entlüften.

Der achte Wechselventilanschluss 44.2 und der elfte Wechselventilanschluss 46.2 sind ihrerseits mit einem Parkbrems-Relaisventil 48 verbunden, das von dem ersten und zweiten Vorratsdruck pV1, pV2 gespeist wird und als Steuerdruck einen Parkbremssteuerdruck pSP empfängt. Der Parkbremssteuerdruck pSP wird von einer anderen Einheit bereitgestellt, wie beispielsweise von einem Parkbremsschalter, einem Parkbremsmodul oder dergleichen, und wird mit Bezug auf Fig. 5 von einem Hinterachs-Relaisventil 214 bereitgestellt, um in einem Normalfahrbetrieb die Federspeicherbremszylinder 220a, 220d zu belüften und somit zu lösen. Über das Hinterachs-Relaisventil 214 können die Federspeicherbremszylinder 220a bis 220d aber auch zum Zusatzbremsen verwendet oder mittels einer Anti-Compound-Funktion beaufschlagt werden. Hierüber kann also der von der Feststellbremsventilanordnung 1 ausgesteuerte erste bzw. zweite Feststellbremsdruck pF1, pF2 übersteuert werden, um für den Fall, dass die Feststellbremsventilanordnung 1 nicht oder nicht richtig funktioniert, oder das Fahrzeug 200 in einem stromlosen abgestellten Zustand ist, die Federspeicherbremszylinder 220a bis 220d zu belüften und somit zu lösen, wenn dies erforderlich ist.

Fig. 5 illustriert nun ein elektronisch steuerbares pneumatisches Bremssystem 210 für ein Fahrzeug 200, wobei das Fahrzeug 200 als Nutzfahrzeug 202 ausgebildet ist und eine Vorderachse VA sowie eine Hinterachse HA und eine zweite Hinterachse HA2 aufweist. Wie aus dem Vergleich der Figuren 4 und 5 zu sehen, ist die Feststellbremsventilanordnung 1 gemäß einem dritten Ausführungsbeispiel (Fig. 4) in dem elektronisch steuerbaren pneumatischen Bremssystem 210 gemäß Fig. 5 umgesetzt. Gleiche und ähnliche Elemente sind wiederum mit den gleichen Bezugszeichen versehen, sodass vollumfänglich auf die obige Beschreibung Bezug genommen wird.

Das elektronisch steuerbare pneumatische Bremssystem 210 weist ein Zentralmodul 222 auf, das über einen Fahrzeugbus 224 mit einer Einheit für autonomes Fahren 226 verbunden ist. Das Zentralmodul 224 wird hier von der ersten Spannungsquelle Q1 versorgt.

Darüber hinaus weist das elektronisch steuerbare pneumatische Bremssystem 210 einen ersten Primärmodulator 228 auf, der zum Steuern der Vorderachse VA vorgesehen ist und die erste elektronische Steuereinheit ECU1 umfasst, sowie einen zweiten Primärmodulator 230, der zum Steuern der Hinterachse vorgesehen ist und die zweite elektronische Steuereinheit ECU2 umfasst. Sowohl der erste als auch der zweite Primärmodulator 228, 230 sind über den Fahrzeugbus 224 mit der Einheit für autonomes Fahren 226 verbunden und empfangen von dieser elektronische Bremsanforderungssignale SB, die von diesen zum Aussteuern eines Vorderachsbremsdrucks pBVA und eines Hinterachsbremsdrucks pBHA umgesetzt werden. Zu diesem Zweck empfängt der erste Primärmodulator 228 den ersten Vorratsdruck pV1 von dem ersten Druckluftvorrat 3, und der zweite Primärmodulator 230 empfängt den zweiten Vorratsdruck pV2 von einem zweiten Druckluftvorrat 5. Der erste Primärmodulator 228 ist mit der ersten Spannungsquelle Q1 und der zweite Primärmodulator 230 mit der zweiten Spannungsquelle Q2 verbunden. Der erste Primärmodulator 228 steuert ferner pneumatisch ein Vorderachs-Relaisventil 232, während der zweite Primärmodulator 230 pneumatisch das Hinterachs-Relaisventil 214 steuert. Das Vorderachs-Relaisventil 232 und Hinterachs-Relaisventil 214 weisen keine eigene Intelligenz auf.

Um eine Redundanzebene darzustellen, sind ferner ein erster Sekundärmodulator 234 und ein zweiter Sekundärmodulator 236 vorgesehen, die ihrerseits ersten bzw. zweiten Vorratsdruck pV1, pV2 empfangen. Die ersten und zweiten Sekundärmodulatoren 234, 236 sind pneumatisch ausgebildet, mit elektromagnetisch schaltbaren Ventilen (nicht gezeigt), aber ohne eigene Intelligenz. Sie sind pneumatisch mit einem Bremswertgeber BST verbunden, der an den ersten und zweiten Sekundärmodulator 234, 236 entsprechende Drücke aussteuert, die dann von dem ersten und zweiten Sekundärmodulator 236, 234 umgesetzt werden können. Die ersten und zweiten Sekundärmodulatoren 234, 236 sind pneumatisch mit den ersten und zweiten Primärmodulatoren 228, 230 verbunden, um im Redundanzfall, beim Ausfall der ersten und/oder zweiten Primärmodulatoren 228, 230, diese pneumatisch zu steuern. Die entsprechenden elektromagnetischen Schaltventile in den ersten und zweiten Sekundärmodulatoren 234, 236 werden jeweils über Kreuz gesteuert, das heißt, der erste Sekundärmodulator 234, der zum Steuern der Vorderachse VA pneumatisch mit dem ersten Primärmodulator 228 verbunden ist, erhält elektrische Schaltsignale für seine elektromagnetisch schaltbaren Ventile vom zweiten Primärmodulator 230, für den Fall, dass der erste Primärmodulator 228 ausfällt. Der zweite Sekundärmodulator 236, der zum Steuern der Hinterachse(n) HA, HA2 pneumatisch mit dem zweiten Primärmodulator 230 verbunden ist, erhält Schaltsignale für seine elektromagnetisch schaltbaren Ventile vom ersten Primärmodulator 228, für den Fall, dass der zweite Primärmodulator 230 ausfällt.

Für den Fall, dass sowohl der erste als auch der zweite Primärmodulator 228, 230 ausfallen, werden von diesen auch keine ersten und zweiten Schaltsignale S1, S2 in der oben bezeichneten Form ausgesteuert, sodass in der Folge der erste und zweite Feststellbremsdruck pF1, pF2 nicht mehr ausgesteuert wird und ggf. auch der Anhängerdruck pA nicht mehr ausgesteuert wird. In der Folge werden die Federspeicherbremszylinder 220a bis 220d des Fahrzeugs 200 entlüftet und somit zugespannt und ggf. der Anhänger eingebremst. Auf diese Weise wird eine weitere Redundanz eingeführt, für den Fall, dass sowohl der erste Primärmodulator 228 als auch der zweite Primärmodulator 230 ausfallen. In diesem Fall kann dann das Fahrzeug 200 immer noch kontrolliert gebremst werden, vorzugsweise mit der mit Bezug auf Fig. 3 beschriebenen nichtlinearen Entlüftungscharakteristik E.

### Bezugszeichenliste (Teil der Beschreibung)

- 1: Feststellbremsventilanordnung
- 2: erster Druckluftpfad
- 3: erster Druckluftvorrat
- 4: zweiter Druckluftpfad
- 5: zweiter Druckluftvorrat
- 6: erste monostabile Ventileinheit
- 7: Entlüftung
- 8: zweite monostabile Ventileinheit
- 10: erstes Wechselventil
- 10.1: erster Wechselventilanschluss
- 10.2: zweiter Wechselventilanschluss
- 10.3: dritter Wechselventilanschluss
- 11: Feststellbremsdruckleitung
- 12: erstes Schaltventil
- 12.1: erster Schaltventilanschluss
- 12.2: zweiter Schaltventilanschluss
- 12.3: dritter Schaltventilanschluss
- 13: erstes 3/2-Wege-Ventil
- 14: zweites Schaltventil
- 14.1: vierter Schaltventilanschluss
- 14.2: fünfter Schaltventilanschluss
- 14.3: sechster Schaltventilanschluss
- 15: zweites 3/2-Wege-Ventil
- 16: drittes Schaltventil
- 16.1: siebter Schaltventilanschluss
- 16.2: achter Schaltventilanschluss
- 16.3: neunter Schaltventilanschluss
- 17: drittes 3/2-Wege-Ventil
- 18: viertes Schaltventil
- 18.1: zehnter Schaltventilanschluss
- 18.2: elfter Schaltventilanschluss
- 18.3: zwölfter Schaltventilanschluss
- 19: viertes 3/2-Wege-Ventil
- 20: Entlüftungsventil
- 22: Druckbegrenzer
- 24: Drossel
- 26: erster Drucksensor
- 28: zweiter Drucksensor
- 30: Anhängerventileinheit
- 32: erstes monostabiles Anhängerschaltventil
- 32.1: erster Anhängerschaltventilanschluss
- 32.2: zweiter Anhängerschaltventilanschluss
- 32.3: dritter Anhängerschaltventilanschluss
- 33: erstes 3/2-Wege-Anhängerschaltventil
- 34: zweites monostabiles Anhängerschaltventil
- 34.1: vierter Anhängerschaltventilanschluss
- 34.2: fünfter Anhängerschaltventilanschluss
- 34.3: sechster Anhängerschaltventilanschluss
- 35: zweites 3/2-Wege-Anhängerschaltventil
- 36: zweites Wechselventil
- 36.1: vierter Wechselventilanschluss
- 36.2: fünfter Wechselventilanschluss
- 36.3: sechster Wechselventilanschluss
- 40: erste Anhängervorsteuerleitung
- 42: zweite Anhängervorsteuerleitung
- 43: T-Stück
- 44: drittes Wechselventil
- 44.1: siebter Wechselventilanschluss
- 44.2: achter Wechselventilanschluss
- 44.3: neunter Wechselventilanschluss
- 46: viertes Wechselventil
- 46.1: zehnter Wechselventilanschluss
- 46.2: elfter Wechselventilanschluss
- 46.3: zwölfter Wechselventilanschluss
- 48: Parkbrems-Relaisventil
- 200: Fahrzeug
- 202: Nutzfahrzeug
- 210: elektronisch steuerbares pneumatisches Bremssystem
- 212: Anhängersteuerventil
- 214: Hinterachs-Relaisventil
- 220a, 220b, 220c, 220d: Federspeicherbremszylinder
- 222: Zentralmodul
- 224: Fahrzeugbus
- 226: Einheit für autonomes Fahren
- 228: erster Primärmodulator
- 230: zweiter Primärmodulator
- 232: Vorderachs-Relaisventil
- 234: erster Sekundärmodulator
- 236: zweiter Sekundärmodulator
- BST: Bremswertgeber
- E: Entlüftungscharakteristik
- ECU1: erste elektronische Steuereinheit
- ECU2: zweite elektronische Steuereinheit
- G1: erster Gradient
- G2: erster Gradient
- pA: Anhängerdruck
- pAV1: erster Anhängervordruck
- pAV2: zweiter Anhängervordruck
- pF1: erster Feststellbremsdruck
- pF2: zweiter Feststellbremsdruck
- pLT: Teilbremsdruck
- pLV: Vollbremsdruck
- pSP: Parkbremssteuerdruck
- pV: Vorratsdruck
- pV1: erster Vorratsdruck
- pV2: zweiter Vorratsdruck
- Q1: erste Spannungsquelle
- Q2: zweite Spannungsquelle
- S1: erstes Schaltsignal
- S2: zweites Schaltsignal
- SB: elektronisches Bremsanforderungssignal
- SP1: erstes Drucksignal
- SP2: zweites Drucksignal
- VA: Vorderachse
- HA: Hinterachse

## Patentansprüche

1. Feststellbremsventilanordnung (1) für ein elektronisch steuerbares pneumatisches Bremssystem (210) eines Fahrzeugs (200), insbesondere Nutzfahrzeug (202), mit:
einem ersten einen ersten oder zweiten Vorratsdruck (pV, pV1, pV2) empfangenden Druckluftpfad (2) mit einer ersten monostabilen Ventileinheit (6) zum Bereitstellen eines ersten Feststellbremsdrucks (pF1),
einem zweiten den ersten oder den zweiten Vorratsdruck (pV, pV1, pV2) empfangenden Druckluftpfad (4) mit einer zweiten monostabilen Ventileinheit (8) zum Bereitstellen eines zweiten Feststellbremsdrucks (pF2), und
einem ersten Wechselventil (10) mit einem mit dem ersten Druckluftpfad (2) und den ersten Feststellbremsdruck (pF1) empfangenden ersten Wechselventilanschluss (10.1), einem mit dem zweiten Druckluftpfad (4) und den zweiten Feststellbremsdruck (pF2) empfangenden zweiten Wechselventilanschluss (10.2), und einem mit einem Federspeicherbremszylinder (220a, 220b, 220c, 220d) verbindbaren dritten Wechselventilanschluss (10.3), wobei das erste Wechselventil (10) jeweils den höheren des ersten Feststellbremsdrucks (pF1) und des zweiten Feststellbremsdrucks (pF2) an dem dritten Wechselventilanschluss (10.3) aussteuert,
**dadurch gekennzeichnet, dass**
die erste monostabile Ventileinheit (6) von einer ersten elektronischen Steuereinheit (ECU1) und die zweite monostabile Ventileinheit (8) von einer zweiten elektronischen Steuereinheit (ECU2) geschaltet wird.

2. Feststellbremsventilanordnung (1) nach Anspruch 1, wobei die erste monostabile Ventileinheit (6) von einer ersten Spannungsquelle (Q1) und die zweite monostabile Ventileinheit (8) von einer zweiten Spannungsquelle (Q2) versorgt wird.

3. Feststellbremsventilanordnung (1) nach einem der vorstehenden Ansprüche, wobei
die erste monostabile Ventileinheit (6) ein erstes Schaltventil (12) und ein zweites Schaltventil (14) aufweist, die derart druckleitend miteinander verbunden sind, dass der erste Feststellbremsdruck (pF1) nur dann ausgesteuert wird, wenn das erste und das zweite Schaltventil (12, 14) bestromt sind, und
die zweite monostabile Ventileinheit (8) ein drittes Schaltventil (16) und ein viertes Schaltventil (18) aufweist, die derart druckleitend miteinander verbunden sind, dass der zweite Feststellbremsdruck (pF2) nur dann ausgesteuert wird, wenn das dritte und das vierte Schaltventil (16, 18) bestromt sind.

4. Feststellbremsventilanordnung (1) nach Anspruch 3, wobei
das erste Schaltventil (12) als ein erstes 3/2-Wege-Ventil (13), das zweite Schaltventil (14) als ein zweites 3/2-Wege-Ventil (15), das dritte Schaltventil (16) als ein drittes 3/2-Wege-Ventil (17) und das vierte Schaltventil (18) als ein viertes 3/2-Wege-Ventil (19) ausgebildet ist, wobei
das erste und das zweite 3/2-Wege-Ventil (13, 15) pneumatisch in Reihe geschaltet sind und das dritte und das vierte 3/2-Wege-Ventil (17, 19) pneumatisch in Reihe geschaltet sind.

5. Feststellbremsventilanordnung (1) nach Anspruch 3 oder 4, wobei
das erste Schaltventil (12) einen den Vorratsdruck (pV, pV1, pV2) empfangenden ersten Schaltventilanschluss (12.1), einen mit dem zweiten Schaltventil (14) verbundenen zweiten Schaltventilanschluss (12.2) und einen mit einer Entlüftung (7) verbundenen dritten Schaltventilanschluss (12.3) aufweist, wobei in einer ersten bestromten Schaltstellung der erste Schaltventilanschluss (12.1) mit dem zweiten Schaltventilanschluss (12.2), und in einer stromlosen zweiten Schaltstellung der zweite Schaltventilanschluss (12.2) mit dem dritten Schaltventilanschluss (12.3) verbunden ist;
das zweite Schaltventil (14) einen mit dem zweiten Schaltventilanschluss (12.2) des ersten Schaltventils (12) verbundenen vierten Schaltventilanschluss (14.1), einen mit dem ersten Wechselventilanschluss (10.1) verbundenen fünften Schaltventilanschluss (14.2) und einen mit einer oder der Entlüftung (7) verbundenen sechsten Schaltventilanschluss (14.3) aufweist, wobei in einer ersten bestromten Schaltstellung der vierte Schaltventilanschluss (14.1) mit dem fünften Schaltventilanschluss (14.2), und in einer stromlosen zweiten Schaltstellung der fünfte Schaltventilanschluss (14.2) mit dem sechsten Schaltventilanschluss (14.3) verbunden ist;
das dritte Schaltventil (16) einen den Vorratsdruck (pV, pV1, pV2) empfangenden siebten Schaltventilanschluss (16.1), einen mit dem vierten Schaltventil (18) verbundenen achten Schaltventilanschluss (16.2) und einen mit einer oder der Entlüftung (7) verbundenen neunten Schaltventilanschluss (16.3) aufweist, wobei in einer ersten bestromten Schaltstellung der siebte Schaltventilanschluss (16.1) mit dem achten Schaltventilanschluss (16.2), und in einer stromlosen zweiten Schaltstellung der achte Schaltventilanschluss (16.2) mit dem neunten Schaltventilanschluss (16.3) verbunden ist;
das vierte Schaltventil (18) einen mit dem achten Schaltventilanschluss (16.2) des dritten Schaltventils (16) verbundenen zehnten Schaltventilanschluss (18.1), einen mit dem zweiten Wechselventilanschluss (10.2) verbundenen elften Schaltventilanschluss (18.2) und einen mit einer oder der Entlüftung (7) verbundenen zwölften Schaltventilanschluss (18.3) aufweist, wobei in einer ersten bestromten Schaltstellung der zehnte Schaltventilanschluss (18.1) mit dem elften Schaltventilanschluss (18.2), und in einer stromlosen zweiten Schaltstellung der elfte Schaltventilanschluss (18.2) mit dem zwölften Schaltventilanschluss (18.3) verbunden ist.

6. Feststellbremsventilanordnung (1) nach einem der vorstehenden Ansprüche, wobei der erste Druckluftpfad (6) zum Entlüften des ersten Wechselventilanschlusses (10.1) und der zweite Druckluftpfad (8) zum Entlüften des zweiten Wechselventilanschlusses (10.2) jeweils mit einem, insbesondere einzigen, Entlüftungsventil (20) verbunden sind.

7. Feststellbremsventilanordnung (1) nach Anspruch 6, wobei das Entlüftungsventil (20) einen Druckbegrenzer (22) und eine Drossel (24) aufweist, die parallel zum Druckbegrenzer (22) angeordnet ist und ein Überströmen des Druckbegrenzers (22) erlaubt.

8. Feststellbremsventilanordnung (1) nach einem der vorstehenden Ansprüche, ferner aufweisend eine Anhängerventileinheit (30) zum Bereitstellen eines Anhängerdrucks (pA).

9. Feststellbremsventilanordnung (1) nach Anspruch 8, wobei die Anhängerventileinheit (30) mit dem ersten und dem zweiten Druckluftpfad (2, 4) verbunden ist.

10. Feststellbremsventilanordnung (1) nach Anspruch 9, wobei die Anhängerventileinheit (30) einen ersten Anhängervordruck (pAV1) von dem ersten Druckluftpfad (2) und einen zweiten Anhängervordruck (pAV2) von dem zweiten Druckluftpfad (4) empfängt, und den jeweils höheren ersten oder zweiten Anhängervordruck (pAV1, pAV2) als Anhängerdruck (pA) aussteuert.

11. Feststellbremsventilanordnung (1) nach einem der Ansprüche 8 bis 10, wobei die Anhängerventileinheit (30) ein mit dem ersten Druckluftpfad (2) verbundenes erstes monostabiles Anhängerschaltventil (32), und ein mit dem zweiten Druckluftpfad (4) verbundenes zweites monostabiles Anhängerschaltventil (34) aufweist.

12. Feststellbremsventilanordnung (1) nach Anspruch 11, wobei das erste monostabile Anhängerschaltventil (32) als erstes 3/2-Wege-Anhängerschaltventil (33), und das zweite monostabile Anhängerschaltventil (34) als zweites 3/2-Wege-Anhängerschaltventil (35) ausgebildet ist.

13. Feststellbremsventilanordnung (1) nach Anspruch 5 und einem der Ansprüche 11 oder 12, wobei
das erste monostabile Anhängerschaltventil (32) einen mit dem zweiten Schaltventilanschluss (12.2) verbundenen ersten Anhängerschaltventilanschluss (32.1), einen mit einem zweiten Wechselventil (36) verbundenen zweiten Anhängerschaltventilanschluss (32.2) und einen mit einer oder der Entlüftung (7) verbundenen dritten Anhängerschaltventilanschluss (32.3) aufweist, und
das zweite monostabile Anhängerschaltventil (34) einen mit dem achten Schaltventilanschluss (16.2) verbundenen vierten Anhängerschaltventilanschluss (34.1), einen mit dem zweiten Wechselventil (36) verbundenen fünften Anhängerschaltventilanschluss (34.2) und einen mit einer oder der Entlüftung (7) verbundenen sechsten Anhängerschaltventilanschluss (34.3) aufweist.

14. Elektronisch steuerbares pneumatisches Bremssystem (210) für ein Fahrzeug (200), insbesondere Nutzfahrzeug (202), mit
einer ersten elektronischen Steuereinheit (ECU1) und einer zweiten elektronischen Steuereinheit (ECU2), wobei die erste und zweite elektronische Steuereinheit (ECU1, ECU2) so ausgelegt sind, dass sie sich im Fehlerfall wenigstens teilweise wechselseitig ersetzen können, und
einer Feststellbremsventilanordnung (1) nach einem der Ansprüche 1 bis 13, wobei die erste elektronische Steuereinheit (ECU1) mit der ersten monostabilen Ventileinheit (6) zum Bereitstellen von ersten Schaltsignalen (S1) an dieser verbunden ist, und die zweite elektronische Steuereinheit (ECU2) mit der zweiten monostabilen Ventileinheit (8) zum Bereitstellen von zweiten Schaltsignalen (S2) an der zweiten monostabilen Ventileinheit (8) verbunden ist.

15. Fahrzeug (200), insbesondere Nutzfahrzeug (202), mit einem elektronisch steuerbaren pneumatischen Bremssystem (210) nach Anspruch 14.

## Claims

1. Parking brake valve assembly (1) for an electronically controllable pneumatic brake system (210) of a vehicle (200), in particular a commercial vehicle (202), comprising:
a first compressed air path (2) receiving a first or second supply pressure (pV, pV1, pV2) and having a first monostable valve unit (6) for providing a first parking brake pressure (pF1),
a second compressed air path (4) receiving the first or the second supply pressure (pV, pV1, pV2) and having a second monostable valve unit (8) for providing a second parking brake pressure (pF2), and
a first shuttle valve (10) having a first shuttle valve connection (10.1) with the first compressed air path (2) and receiving the first parking brake pressure (pF1), a second shuttle valve connection (10.2) with the second compressed air path (4) and receiving the second parking brake pressure (pF2), and a third shuttle valve connection (10.3) which can be connected to a spring-loaded brake cylinder (220a, 220b, 220c, 220d), wherein the first shuttle valve (10) outputs the higher of the first parking brake pressure (pF1) and the second parking brake pressure (pF2) at the third shuttle valve connection (10.3),
**characterized in that**
the first monostable valve unit (6) is switched by a first electronic control unit (ECU1) and the second monostable valve unit (8) is switched by a second electronic control unit (ECU2).

2. Parking brake valve assembly (1) according to claim 1, wherein the first monostable valve unit (6) is supplied by a first voltage source (Q1) and the second monostable valve unit (8) is supplied by a second voltage source (Q2).

3. Parking brake valve assembly (1) according to any one of the preceding claims, wherein
the first monostable valve unit (6) comprises a first switching valve (12) and a second switching valve (14) which are connected to one another in a pressure-conducting manner such that the first parking brake pressure (pF1) is output only when the first and the second switching valve (12, 14) are energized, and
the second monostable valve unit (8) comprises a third switching valve (16) and a fourth switching valve (18) which are connected to one another in a pressure-conducting manner such that the second parking brake pressure (pF2) is output only when the third and fourth switching valve (16, 18) are energized.

4. Parking brake valve assembly (1) according to claim 3, wherein
the first switching valve (12) is designed as a first 3/2-way valve (13), the second switching valve (14) is designed as a second 3/2-way valve (15), the third switching valve (16) is designed as a third 3/2-way valve (17) and the fourth switching valve (18) is designed as a fourth 3/2-way valve (19), wherein
the first and the second 3/2-way valve (13, 15) are pneumatically connected in series and the third and fourth 3/2-way valve (17, 19) are pneumatically connected in series.

5. Parking brake valve assembly (1) according to claim 3 or 4, wherein
the first switching valve (12) comprises a first switching valve connection (12.1) which receives the supply pressure (pV, pV1, pV2), a second switching valve connection (12.2) which is connected to the second switching valve (14), and a third switching valve connection (12.3) which is connected to a vent (7), wherein, in a first energized switching position, the first switching valve connection (12.1) is connected to the second switching valve connection (12.2) and, in a de-energized second switching position, the second switching valve connection (12.2) is connected to the third switching valve connection (12.3);
the second switching valve (14) comprises a fourth switching valve connection (14.1) which is connected to the second switching valve connection (12.2) of the first switching valve (12), a fifth switching valve connection (14.2) which is connected to the first shuttle valve connection (10.1), and a sixth switching valve connection (14.3) which is connected to a or the vent (7), wherein, in a first energized switching position, the fourth switching valve connection (14.1) is connected to the fifth switching valve connection (14.2) and, in a de-energized second switching position, the fifth switching valve connection (14.2) is connected to the sixth switching valve connection (14.3);
the third switching valve (16) comprises a seventh switching valve connection (16.1) which receives the supply pressure (pV, pV1, pV2), an eighth switching valve connection (16.2) which is connected to the fourth switching valve (18) and a ninth switching valve connection (16.3) which is connected to a or the vent (7), wherein, in a first energized switching position, the seventh switching valve connection (16.1) is connected to the eighth switching valve connection (16.2) and, in a de-energized second switching position, the eighth switching valve connection (16.2) is connected to the ninth switching valve connection (16.3);
the fourth switching valve (18) comprises a tenth switching valve connection (18.1) which is connected to the eighth switching valve connection (16.2) of the third switching valve (16), an eleventh switching valve connection (18.2) which is connected to the second shuttle valve connection (10.2) and a twelfth switching valve connection (18.3) which is connected to a or the vent (7), wherein, in a first energized switching position, the tenth switching valve connection (18.1) is connected to the eleventh switching valve connection (18.2) and, in a de-energized second switching position, the eleventh switching valve connection (18.2) is connected to the twelfth switching valve connection (18.3).

6. Parking brake valve assembly (1) according to any one of the preceding claims, wherein the first compressed air path (6) for venting the first shuttle valve connection (10.1) and the second compressed air path (8) for venting the second shuttle valve connection (10.2) are each connected to one, in particular a single, vent valve (20).

7. Parking brake valve assembly (1) according to claim 6, wherein the vent valve (20) comprises a pressure limiter (22) and a throttle (24) which is arranged parallel to the pressure limiter (22) and allows overflow of the pressure limiter (22).

8. Parking brake valve assembly (1) according to any one of the preceding claims, further comprising a trailer valve unit (30) for providing a trailer pressure (pA).

9. Parking brake valve assembly (1) according to claim 8, wherein the trailer valve unit (30) is connected to the first and the second compressed air path (2, 4).

10. Parking brake valve assembly (1) according to claim 9, wherein the trailer valve unit (30) receives a first trailer pre-pressure (pAV1) from the first compressed air path (2) and a second trailer pre-pressure (pAV2) from the second compressed air path (4), and outputs the higher of the first or second trailer pre-pressure (pAV1, pAV2) as the trailer pressure (pA).

11. Parking brake valve assembly (1) according to any one of claims 8 to 10, wherein the trailer valve unit (30) comprises a first monostable trailer switching valve (32) connected to the first compressed air path (2), and a second monostable trailer switching valve (34) connected to the second compressed air path (4).

12. Parking brake valve assembly (1) according to claim 11, wherein the first monostable trailer switching valve (32) is designed as a first 3/2-way trailer switching valve (33), and the second monostable trailer switching valve (34) is designed as a second 3/2-way trailer switching valve (35).

13. Parking brake valve assembly (1) according to claim 5 and any one of claims 11 or 12, wherein
the first monostable trailer switching valve (32) comprises a first trailer switching valve connection (32.1) which is connected to the second switching valve connection (12.2), a second trailer switching valve connection (32.2) which is connected to a second shuttle valve (36), and a third trailer switching valve connection (32.3) which is connected to a or the vent (7), and
the second monostable trailer switching valve (34) comprises a fourth trailer switching valve connection (34.1) which is connected to the eighth switching valve connection (16.2), a fifth trailer switching valve connection (34.2) which is connected to the second shuttle valve (36), and a sixth trailer switching valve connection (34.3) which is connected to a or the vent (7).

14. Electronically controllable pneumatic brake system (210) for a vehicle (200), in particular a commercial vehicle (202), comprising
a first electronic control unit (ECU1) and a second electronic control unit (ECU2), wherein the first and the second electronic control unit (ECU1, ECU2) are designed in such a way that they can at least partially replace one another in the event of a fault, and
a parking brake valve assembly (1) according to any one of claims 1 to 13, wherein the first electronic control unit (ECU1) is connected to the first monostable valve unit (6) for providing first switching signals (S1) thereto, and the second electronic control unit (ECU2) is connected to the second monostable valve unit (8) for providing second switching signals (S2) to the second monostable valve unit (8).

15. Vehicle (200), in particular a commercial vehicle (202), comprising an electronically controllable pneumatic brake system (210) according to claim 14.

## Revendications

1. Agencement de soupape de frein de stationnement (1) pour un système de freinage pneumatique (210) à commande électronique d'un véhicule (200), en particulier d'un véhicule utilitaire (202), comportant :
un premier trajet d'air comprimé (2) recevant une première ou une seconde pression de réserve (pV, pV1, pV2) comportant une première unité de soupape monostable (6) pour la fourniture d'une première pression de frein de stationnement (pF1),
un second trajet d'air comprimé (4) recevant la première ou la seconde pression de réserve (pV, pV1, pV2) comportant une seconde unité de soupape monostable (8) pour la fourniture d'une seconde pression de frein de stationnement (pF2), et
une première soupape de changement (10) comportant un premier raccord de soupape de changement (10.1) recevant la première pression de frein de stationnement (pF1) avec le premier trajet d'air comprimé (2), un second raccord de soupape de changement (10.2) recevant la seconde pression de frein de stationnement (pF2) avec le second trajet d'air comprimé (4), et un troisième raccord de soupape de changement (10.3) pouvant être relié à un cylindre de frein à ressort (220a, 220b, 220c, 220d), dans lequel la première soupape de changement (10) commande respectivement la plus élevée de la première pression de frein de stationnement (pF1) et de la seconde pression de frein de stationnement (pF2) au niveau du troisième raccord de soupape de changement (10.3),
**caractérisé en ce que**
la première unité de soupape monostable (6) est commutée par une première unité de commande électronique (ECU1) et la seconde unité de soupape monostable (8) est commutée par une seconde unité de commande électronique (ECU2).

2. Agencement de soupape de frein de stationnement (1) selon la revendication 1, dans lequel la première unité de soupape monostable (6) est alimentée par une première source de tension (Q1) et la seconde unité de soupape monostable (8) est alimentée par une seconde source de tension (Q2).

3. Agencement de soupape de frein de stationnement (1) selon l'une des revendications précédentes, dans lequel
la première unité de soupape monostable (6) présente une première soupape de commutation (12) et une deuxième soupape de commutation (14) qui sont reliées l'une à l'autre de manière à conduire la pression, de telle sorte que la première pression de frein de stationnement (pF1) n'est commandée que lorsque la première et la deuxième soupape de commutation (12, 14) sont alimentées en courant, et
la seconde unité de soupape monostable (8) présente une troisième soupape de commutation (16) et une quatrième soupape de commutation (18) qui sont reliées l'une à l'autre de manière à conduire la pression, de telle sorte que la seconde pression de frein de stationnement (pF2) n'est commandée que lorsque la troisième et la quatrième soupape de commutation (16, 18) sont alimentées en courant.

4. Agencement de soupape de frein de stationnement (1) selon la revendication 3, dans lequel
la première soupape de commutation (12) est conçue comme une première soupape à 3/2 voies (13), la deuxième soupape de commutation (14) comme une deuxième soupape à 3/2 voies (15), la troisième soupape de commutation (16) comme une troisième soupape à 3/2 voies (17) et la quatrième soupape de commutation (18) comme une quatrième soupape à 3/2 voies (19), dans lequel
les première et deuxième soupapes à 3/2 voies (13, 15) sont branchées pneumatiquement en série et les troisième et quatrième soupapes à 3/2 voies (17, 19) sont branchées pneumatiquement en série.

5. Agencement de soupape de frein de stationnement (1) selon la revendication 3 ou 4, dans lequel
la première soupape de commutation (12) présente un premier raccord de soupape de commutation (12.1) recevant la pression de réserve (pV, pV1, pV2), un deuxième raccord de soupape de commutation (12.2) relié à la deuxième soupape de commutation (14) et un troisième raccord de soupape de commutation (12.3) relié à une purge d'air (7), dans lequel le premier raccord de soupape de commutation (12.1) est relié au deuxième raccord de soupape de commutation (12.2) dans une première position de commutation alimentée en courant, et le deuxième raccord de soupape de commutation (12.2) est relié au troisième raccord de soupape de commutation (12.3) dans une seconde position de commutation non alimentée en courant ;
la deuxième soupape de commutation (14) présente un quatrième raccord de soupape de commutation (14.1) relié au deuxième raccord de soupape de commutation (12.2) de la première soupape de commutation (12), un cinquième raccord de soupape de commutation (14.2) relié au premier raccord de soupape de changement (10.1) et un sixième raccord de soupape de commutation (14.3) relié à une ou à la purge d'air (7), dans lequel, dans une première position de commutation alimentée en courant, le quatrième raccord de soupape de commutation (14.1) est relié au cinquième raccord de soupape de commutation (14.2), et dans une seconde position de commutation non alimentée en courant, le cinquième raccord de soupape de commutation (14.2) est relié au sixième raccord de soupape de commutation (14.3) ;
la troisième soupape de commutation (16) présente un septième raccord de soupape de commutation (16.1) recevant la pression de réserve (pV, pV1, pV2), un huitième raccord de soupape de commutation (16.2) relié à la quatrième soupape de commutation (18) et un neuvième raccord de soupape de commutation (16.3) relié à une ou à la purge d'air (7), dans lequel, dans une première position de commutation alimentée en courant, le septième raccord de soupape de commutation (16.1) est relié au huitième raccord de soupape de commutation (16.2), et dans une seconde position de commutation non alimentée en courant, le huitième raccord de soupape de commutation (16.2) est relié au neuvième raccord de soupape de commutation (16.3) ;
la quatrième soupape de commutation (18) présente un dixième raccord de soupape de commutation (18.1) relié au huitième raccord de soupape de commutation (16.2) de la troisième soupape de commutation (16), un onzième raccord de soupape de commutation (18.2) relié au second raccord de soupape de changement (10.2) et un douzième raccord de soupape de commutation (18.3) relié à une ou à la purge d'air (7), dans lequel, dans une première position de commutation alimentée en courant, le dixième raccord de soupape de commutation (18.1) est relié au onzième raccord de soupape de commutation (18.2), et dans une seconde position de commutation non alimentée en courant, le onzième raccord de soupape de commutation (18.2) est relié au douzième raccord de soupape de commutation (18.3).

6. Ensemble de soupape de frein de stationnement (1) selon l'une des revendications précédentes, dans lequel le premier trajet d'air comprimé (6) pour la purge du premier raccord de soupape de changement (10.1) et le second trajet d'air comprimé (8) pour la purge du second raccord de soupape de changement (10.2) sont respectivement reliés à une soupape de purge d'air (20), en particulier unique.

7. Agencement de soupape de frein de stationnement (1) selon la revendication 6, dans lequel la soupape de purge d'air (20) présente un limiteur de pression (22) et un étranglement (24) qui est disposé parallèlement au limiteur de pression (22) et qui permet un débordement du limiteur de pression (22).

8. Agencement de soupape de frein de stationnement (1) selon l'une des revendications précédentes, présentant en outre une unité de soupape de remorque (30) pour la fourniture d'une pression de remorque (pA).

9. Agencement de soupape de frein de stationnement (1) selon la revendication 8, dans lequel l'unité de soupape de remorque (30) est reliée aux premier et second trajets d'air comprimé (2, 4).

10. Agencement de soupape de frein de stationnement (1) selon la revendication 9, dans lequel l'unité de soupape de remorque (30) reçoit une première pression de réserve de remorque (pAV1) du premier trajet d'air comprimé (2) et une seconde pression de réserve de remorque (pAV2) du second trajet d'air comprimé (4), et commande la première ou la seconde pression de réserve de remorque (pAV1, pAV2) respectivement la plus élevée comme pression de remorque (pA).

11. Agencement de soupape de frein de stationnement (1) selon l'une des revendications 8 à 10, dans lequel l'unité de soupape de remorque (30) présente une première soupape de commutation de remorque monostable (32) reliée au premier trajet d'air comprimé (2), et une seconde soupape de commutation de remorque monostable (34) reliée au second trajet d'air comprimé (4).

12. Agencement de soupape de frein de stationnement (1) selon la revendication 11, dans lequel la première soupape de commutation de remorque monostable (32) est conçue comme première soupape de commutation de remorque à 3/2 voies (33), et la seconde soupape de commutation de remorque monostable (34) est conçue comme seconde soupape de commutation de remorque à 3/2 voies (35).

13. Agencement de soupape de frein de stationnement (1) selon la revendication 5 et l'une des revendications 11 ou 12, dans lequel
la première soupape de commutation de remorque monostable (32) présente un premier raccord de soupape de commutation de remorque (32.1) relié au deuxième raccord de soupape de commutation (12.2), un deuxième raccord de soupape de commutation de remorque (32.2) relié à une deuxième soupape de commutation (36) et un troisième raccord de soupape de commutation de remorque (32.3) relié à une ou à la purge d'air (7), et
la seconde soupape de commutation de remorque monostable (34) présente un quatrième raccord de soupape de commutation de remorque (34.1) relié au huitième raccord de soupape de commutation (16.2), un cinquième raccord de soupape de commutation de remorque (34.2) relié à la seconde soupape de changement (36) et un sixième raccord de soupape de commutation de remorque (34.3) relié à une ou à la purge d'air (7).

14. Système de freinage pneumatique (210) à commande électronique pour un véhicule (200), en particulier un véhicule utilitaire (202), comportant
une première unité de commande électronique (ECU1) et une seconde unité de commande électronique (ECU2), dans lequel la première et la seconde unité de commande électronique (ECU1, ECU2) sont équipées de telle sorte qu'elles peuvent se remplacer mutuellement au moins partiellement en cas de défaillance, et
un agencement de soupape de frein de stationnement (1) selon l'une des revendications 1 à 13, dans lequel la première unité de commande électronique (ECU1) est reliée à la première unité de soupape monostable (6) pour la fourniture de premiers signaux de commutation (S1) à celle-ci, et la seconde unité de commande électronique (ECU2) est reliée à la seconde unité de soupape monostable (8) pour la fourniture de seconds signaux de commutation (S2) à la seconde unité de soupape monostable (8).

15. Véhicule (200), en particulier véhicule utilitaire (202), comportant un système de freinage pneumatique (210) à commande électronique selon la revendication 14.
